# EUROPEAN PATENT APPLICATION

(11) **EP 4 797 678 A1**
(43) Date of publication of application: **26.08.2026**
(21) Application number: 24907925.2
(22) Date of filing: 06.12.2024
(51) Int. Cl.: H04N 9/31, G03B 21/53

(54) **ELECTRONIC DEVICE AND CONTROL METHOD THEREFOR**

(30) Priority: 18.12.2023 KR 20230185053
(71) Applicant: Samsung Electronics Co., Ltd., Suwon-si, Gyeonggi-do 16677 (KR)
(72) Inventor: JUNG, Yunsung, Suwon-si, Gyeonggi-do 16677 (KR)
(74) Representative: Walaski, Jan Filip
(86) International application number: PCT/KR2024/019956
(87) International publication number: WO 2025/135641

(57) **Abstract**

This electronic apparatus comprises a projection unit, a memory, and at least one processor for controlling the projection unit, which outputs a projection image in an ultra-short throw mode or a regular mode, wherein, when receiving a projection command, the at least one processor controls the projection unit so as to: identify the position of a projection surface on the basis of the minimum screen size of the projection image output onto the projection surface; acquire the projection position on the basis of the position of the projection surface, the minimum screen size and the projection ratio; and output the projection image onto the projection surface according to any one of an ultra-short throw mode and a regular mode on the basis of the projection position.

## Description

### [TECHNICAL FIELD]

Apparatuses and methods consistent with the disclosure relate to an electronic apparatus and a control method therefor, and more particularly, to an electronic apparatus that outputs a projection image in an ultra-short throw mode or a regular mode, and a control method therefor.

### [Background Art]

An ultra-short throw mode and a regular mode may be implemented through a single device. In response to a user command, the apparatus move to a position close to a projection surface and output a projection image in the ultra-short-throw mode. In response to a user command, the apparatus may move to a position farther away from the projection surface and output a projection image in the regular mode.

Depending on the projection environment, either the ultra-short throw mode or the regular mode may be appropriate. When the user determines the projection mode each time by considering the projection environment, it is inconvenient for the user to manually input control commands.

The projection environment may include spatial complexity, the presence of obstacles, or the like. When the ultra-short-throw mode or the regular mode is automatically selected, it may be difficult to determine which mode is more suitable for the user.

### [Disclosure of Invention]

### [Solution to Problem]

The present disclosure is designed to address the above-described problems, and an object of the present disclosure is to provide an electronic apparatus that identifies projection positions for an ultra-short throw mode and a regular mode, respectively, and determines a target mode for any one of the ultra-short throw mode or the regular mode, and a control method therefor.

In accordance with an aspect of the disclosure, an electronic apparatus includes: a projection unit; a memory; and at least one processor configured to control the projection unit to output a projection image in an ultra-short throw mode or a regular mode, in which the at least one processor is configured to, when a projection command is received, identify a position of a projection surface based on a minimum screen size of the projection image output to the projection surface, obtain the projection position based on the position of the projection surface, the minimum screen size, and a projection ratio, and control the projection unit to output the projection image to the projection surface according to any one of the ultra-short throw mode or the regular mode based on the projection position.

The ultra-short throw mode may be a mode of outputting the projection image with a first projection ratio, the regular mode may be a mode of outputting the projection image with a second projection ratio smaller than a first projection ratio, and the at least one processor may be configured to obtain a first projection position corresponding to the ultra-short throw mode based on the position of the projection surface, the minimum screen size, and the first projection ratio, obtain a second projection position corresponding to the regular mode based on the position of the projection surface, the minimum screen size, and the second projection ratio, and control the projection unit to output the projection image to the projection surface according to any one of the ultra-short throw mode or the regular mode based on the first projection position and the second projection position.

The at least one processor may be configured to determine the one mode by comparing a first predicted time, which is a sum of a first movement time from a current position of the electronic device to the first projection position and a switching time, with a second predicted time, which is a sum of a second movement time from the current position of the electronic device to the second projection position and the switching time.

The switching time may include one of a time required to switch from a first state in which the projection unit is controlled in the ultra-short throw mode to a second state in which the projection unit is controlled in the regular mode, or a time required to switch from the second state to the first state.

When the first predicted time is less than or equal to the second predicted time, the at least one processor may be configured to control the projection unit to move to the first projection position and output the projection image to the projection surface based on the ultra-short throw mode.

The at least one processor may be configured to obtain a first screen size of the projection image to be output to the projection surface in the ultra-short throw mode based on the first projection position, the position of the projection surface, and the first projection ratio, obtain a second screen size of the projection image to be output to the projection surface in the regular mode based on the second projection position, the position of the projection surface, and the second projection ratio, and determine the one mode by comparing the first screen size and the second screen size.

When a size difference value between the first screen size and the second screen size is greater than or equal to a threshold size value, the at least one processor may be configured to change the second projection position to be farther away from the projection surface.

The at least one processor may be configured to obtain a first brightness value of the projection image to be output to the projection surface in the ultra-short throw mode at the first projection position, obtain a second brightness value of the projection image to be output to the projection surface in the regular mode at the second projection position, and compare the first brightness value and the second brightness value to determine the one mode.

When a brightness difference value between the first brightness value and the second brightness value is greater than or equal to a threshold size value, the at least one processor may be configured to change the second projection position to be closer to the projection surface.

The at least one processor may be configured to obtain the first projection position between a first minimum position in the ultra-short throw mode based on the position of the projection surface, the minimum screen size, and the first projection ratio, and a first maximum position in the ultra-short throw mode based on the position of the projection surface, the size of the projection surface, and the first projection ratio.

In accordance with another aspect of the disclosure, a control method of an electronic apparatus including a projection unit outputting a projection image in an ultra-short throw mode or a regular mode includes: identifying a position of a projection surface based on a minimum screen size of the projection image output to the projection surface when a projection command is received; obtaining the projection position based on the position of the projection surface, the minimum screen size, and a projection ratio; and outputting the projection image to the projection surface according to any one of the ultra-short throw mode or the regular mode based on the projection position.

The ultra-short throw mode may be a mode of outputting the projection image with a first projection ratio, the regular mode may be a mode of outputting the projection image with a second projection ratio smaller than a first projection ratio, in the obtaining of the projection position, a first projection position corresponding to the ultra-short throw mode may be obtained based on the position of the projection surface, the minimum screen size, and the first projection ratio, and a second projection position corresponding to the regular mode may be obtained based on the position of the projection surface, the minimum screen size, and the second projection ratio, and in the outputting of the projection image, the projection image may be output to the projection surface according to any one of the ultra-short throw mode or the regular mode based on the first projection position and the second projection position.

The control method may further include determining the one mode by comparing a first predicted time, which is a sum of a first movement time from a current position of the electronic device to the first projection position and a switching time, with a second predicted time, which is a sum of a second movement time from the current position of the electronic device to the second projection position and the switching time.

The switching time may include one of a time required to switch from a first state in which the projection unit is controlled in the ultra-short throw mode to a second state in which the projection unit is controlled in the regular mode, or a time required to switch from the second state to the first state.

The control method may further include moving to the first projection position and outputting the projection image to the projection surface based on the ultra-short throw mode, when the first predicted time is less than or equal to the second predicted time.

In the determining of the one mode, the first screen size of the projection image to be output to the projection surface in the ultra-short throw mode may be obtained based on the first projection position, the position of the projection surface, and the first projection ratio, the second screen size of the projection image to be output to the projection surface in the regular mode may be obtained based on the second projection position, the position of the projection surface, and the second projection ratio, and the first screen size and the second screen size may be compared to determine the one mode.

The control method may further include changing the second projection position to be farther away from the projection surface when the size difference value between the first screen size and the second screen size is greater than or equal to a threshold size value.

In the determining of the one mode, a first brightness value of the projection image to be output to the projection surface in the ultra-short throw mode may be obtained at the first projection position, a second brightness value of the projection image to be output to the projection surface in the regular mode may be obtained at the second projection position, and the one mode may be determined by comparing the first brightness value and the second brightness value.

The control method may further include changing the second projection position to be closer to the projection surface when the brightness difference value between the first brightness value and the second brightness value is greater than or equal to a threshold brightness value.

In the obtaining of the first projection position, the first projection position may be obtained between a first minimum position in the ultra-short throw mode based on the position of the projection surface, the minimum screen size, and the first projection ratio, and a first maximum position in the ultra-short throw mode based on the position of the projection surface, the size of the projection surface, and the first projection ratio.

### [Brief Description of Drawings]

FIG. 1 is a block diagram of an electronic apparatus according to an embodiment.
FIG. 2 is a block diagram for describing a specific configuration of the electronic apparatus of FIG. 1 according to an embodiment.
FIG. 3 is a diagram for describing a first projection position and a second projection position, according to an embodiment.
FIG. 4 is a diagram for describing an operation of obtaining various positions used to determine a projection position according to an embodiment.
FIG. 5 is a diagram for describing an operation of determining an ultra-short throw mode or a regular mode according to an embodiment.
FIG. 6 is a diagram for describing an operation of determining a projection mode, according to an embodiment.
FIG. 7 is a diagram for describing a calculation method according to a section in which an electronic apparatus is positioned, according to an embodiment.
FIG. 8 is a diagram for describing a preset section according to an embodiment.
FIG. 9 is a diagram for describing a situation in which an electronic apparatus is positioned in a first section r1, according to an embodiment.
FIG. 10 is a diagram for describing an operation of obtaining a predicted time when the electronic apparatus is positioned in the first section r1, according to an embodiment.
FIG. 11 is a diagram for describing an operation of comparing predicted times and an operation of comparing brightness values when the electronic apparatus is positioned in the first section r1, according to an embodiment.
FIG. 12 is a diagram for describing a situation in which the electronic apparatus is positioned in a second section r2, according to an embodiment.
FIG. 13 is a diagram for describing an operation of obtaining a predicted time when the electronic apparatus is positioned in a second section r2, according to an embodiment.
FIG. 14 is a diagram for describing an operation of changing a second projection position when the electronic apparatus is positioned in the second section r2, according to an embodiment.
FIG. 15 is a diagram for describing an operation of comparing screen sizes when the electronic apparatus is positioned in the second section r2, according to an embodiment.
FIG. 16 is a diagram for describing an operation of comparing brightness values when the electronic apparatus is positioned in the second section r2, according to an embodiment.
FIG. 17 is a diagram for describing a situation where the electronic apparatus is positioned in a third section r3, according to an embodiment.
FIG. 18 is a diagram for describing an operation of obtaining a predicted time when the electronic apparatus is positioned in the third section r3, according to an embodiment.
FIG. 19 is a diagram for describing a situation in which the electronic apparatus is positioned in a fourth section r4, according to an embodiment.
FIG. 20 is a diagram for describing an operation of obtaining a predicted time when the electronic apparatus is positioned in the fourth section r4, according to an embodiment.
FIG. 21 is a diagram for describing an operation of changing the second projection position when the electronic apparatus is positioned in the fourth section r4, according to an embodiment.
FIG. 22 is a diagram for describing an operation of comparing brightness values when the electronic apparatus is positioned in the fourth section r4, according to an embodiment.
FIG. 23 is a diagram for describing a situation where the electronic apparatus is positioned in a fifth section r5, according to an embodiment.
FIG. 24 is a diagram for describing an operation of obtaining a predicted time when the electronic apparatus is positioned in the fifth section r5, according to an embodiment.
FIG. 25 is a diagram for describing an operation of changing the second projection position when the electronic apparatus is positioned in the fifth section r5, according to an embodiment.
FIG. 26 is a diagram for describing an operation of comparing brightness values when the electronic apparatus is positioned in the fifth section r5, according to an embodiment.
FIG. 27 is a diagram for describing multiple modules included in the electronic apparatus, according to an embodiment.
FIG. 28 is a diagram for describing an operation of changing the second projection position, according to an embodiment.
FIG. 29 is a diagram for describing an operation of identifying an obstacle object, according to an embodiment.
FIG. 30 is a diagram for describing an operation of changing a movement position, according to an embodiment.
FIG. 31 is a diagram for describing an operation of determining a projection position in consideration of a user's activity radius, according to an embodiment.
FIG. 32 is a diagram for describing an operation of determining a movement position in consideration of a projection environment, according to an embodiment.
FIG. 33 is a diagram for describing a mobile projector according to an embodiment.
FIG. 34 is a diagram for describing a distance between the projection surface and the electronic apparatus according to an embodiment.
FIG. 35 is a diagram for describing a movement operation of the electronic apparatus according to an embodiment.
FIG. 36 is a diagram for describing a notification regarding position movement, according to an embodiment.
FIG. 37 is a diagram for describing the keystone correction function according to an embodiment.
FIG. 38 is a diagram for describing the keystone correction function according to an embodiment.
FIG. 39 is a diagram for describing an operation of changing a projection area, according to an embodiment.
FIG. 40 is a diagram for describing an operation of outputting the projection image using a plurality of apparatuses according to an embodiment.
FIG. 41 is a diagram for describing an operation of changing the projection image based on a distance.
FIG. 42 is a diagram for describing a control method of an electronic apparatus according to an embodiment.

### [Mode for Invention]

Hereinafter, the present disclosure will be described in detail with reference to the accompanying drawings.

General terms that are currently widely used were selected as terms used in embodiments of the present disclosure in consideration of functions in the present disclosure, but may be changed depending on the intention of those skilled in the art or a judicial precedent, the emergence of a new technique, and the like. In addition, in a specific case, terms arbitrarily chosen by an applicant may exist. In this case, the meaning of such terms will be mentioned in detail in a corresponding description portion of the present disclosure. Therefore, the terms used in the present disclosure should be defined on the basis of the meaning of the terms and the contents throughout the present disclosure rather than simple names of the terms.

In the disclosure, an expression "have," "may have," "include," "may include," or the like, indicates existence of a corresponding feature (for example, a numerical value, a function, an operation, a component such as a part, or the like), and does not exclude existence of an additional feature.

An expression "at least one of A and/or B" is to be understood to represent "A" or "B" or "any one of A and B."

Expressions "first," "second," "1st" or "2nd" or the like, used in the present specification may indicate various components regardless of a sequence and/or importance of the components, will be used only in order to distinguish one component from the other components, and do not limit the corresponding components.

When it is mentioned that any component (for example: a first component) is (operatively or communicatively) coupled with/to or is connected to another component (for example: a second component), it is to be understood that any component is directly coupled to another component or may be coupled to another component through the other component (for example: a third component).

Singular expressions are intended to include plural expressions unless the context clearly represents otherwise. It will be further understood that the terms "comprises" or "have" used in this specification, specify the presence of stated features, steps, operations, components, parts mentioned in this specification, or a combination thereof, but do not preclude the presence or addition of one or more other features, numerals, steps, operations, components, parts, or a combination thereof.

In the disclosure, a "module" or a "~er/or" may perform at least one function or operation, and be implemented by hardware or software or be implemented by a combination of hardware and software. In addition, a plurality of "modules" or a plurality of "~ers/~ors" may be integrated in at least one module and be implemented by at least one processor (not illustrated) except for a "module" or a "~er/or" that needs to be implemented by specific hardware.

In the present disclosure, the term user may refer to a person using an electronic apparatus or a device (e.g., an artificial intelligence electronic apparatus) using an electronic apparatus.

Hereinafter, an embodiment of the disclosure will be described in detail with reference to the accompanying drawings.

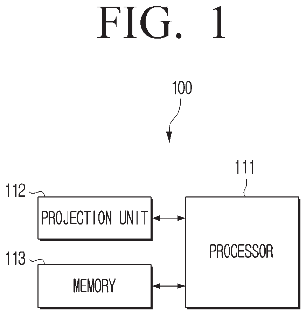

FIG. 1 is a block diagram for describing an electronic apparatus 100 according to an embodiment.

Referring to FIG. 1, the electronic apparatus 100 may include at least one processor 111, a projection unit 112, and a memory 113, and a sensor unit 121.

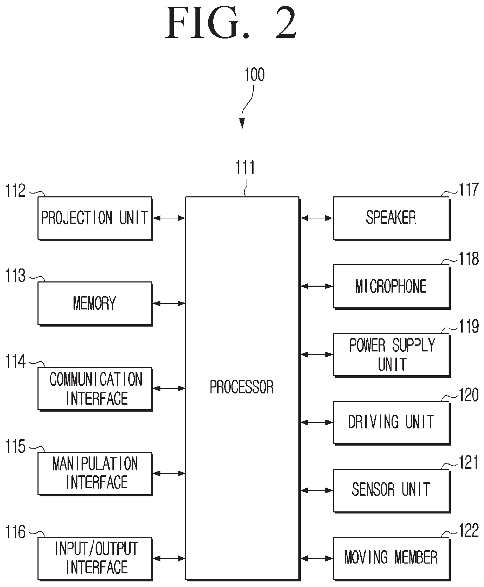

At least one processor 111 may perform an overall control operation of the electronic apparatus 100. Specifically, at least one processor 111 may perform a function of controlling an overall operation of the electronic apparatus 100. . A detailed description of the at least one processor 111 is described in FIG. 2.

The projection unit 112 is a component that projects images (projection image, content, etc.) to the outside. A detailed description of the projection unit is described in FIG. 2.

The memory 113 may store the projection image projected through the projection unit 112. The projection image may refer to not only a still image but also a continuous image (or video). The projection image may refer to an image included in the content. The memory 113 may store a driving O/S.

At least one processor 111 may control various operations performed in the electronic apparatus 100.

At least one processor 111 may control a projection unit 112, a memory 113, and the projection unit 112 that outputs a projection image in ultra-short throw mode or regular mode.

When a projection command is received, at least one processor 111 may identify a position of a projection surface based on a minimum screen size of the projection image to be output on the projection surface, obtain the projection position based on the position of the projection surface, the minimum screen size, and the projection ratio, and control the projection unit 112 to output the projection image to the projection surface according to any one of an ultra-short throw mode or a regular mode based on the projection position.

The ultra-short throw mode may be a mode of outputting a projection image with the first projection ratio. The first projection ratio may represent a projection ratio corresponding to the ultra-short throw mode. The electronic apparatus 100 may include an ultra-short throw lens in the projection unit 112. At least one processor 111 may output the projection image using the ultra-short throw lens. The first projection ratio may represent a projection ratio corresponding to the ultra-short throw lens.

A regular mode may be a mode of outputting the projection image with a second projection ratio smaller than a first projection ratio. The second projection ratio may represent a projection ratio corresponding to the regular mode. The electronic apparatus 100 may include a projection unit 112 that includes a regular lens. At least one processor 111 may output a projection image using a regular lens. The second projection ratio may represent the projection ratio corresponding to the regular lens.

A small projection ratio may mean that an output size of a projection image projected at the same projection distance (the distance from the position of the projection surface 10 to the projection position) is small. The second projection ratio corresponding to the regular mode may be smaller than the first projection ratio corresponding to the ultra-short throw mode. When using a regular projection mode to output a projection image of the same size, the projection image may need to be output from a longer distance than in ultra-short throw mode.

At least one processor 111 may control the projection unit 112 in the ultra-short throw mode, which outputs a projection image with the first projection ratio, or the regular mode, which outputs a projection image with the second projection ratio smaller than the first projection ratio.

The ultra-short throw mode may be a projection mode that outputs a projection image from a relatively short distance. The ultra-short throw mode may include a mode of outputting a projection image using a dedicated lens corresponding to the ultra-short throw mode. The regular mode may include a mode of outputting a projection image using a regular lens rather than the ultra-short throw mode. The ultra-short throw mode may be described as a first method, a first state, a first mode, etc. The regular mode may be described as a second method, a second state, a second mode, etc.

At least one processor 111 may, when a projection command is received, obtain the minimum screen size of the projection image to be output to the projection surface 10 based on the projection command, determine a position of the projection surface 10 based on the minimum screen size, obtain a first projection position corresponding to the ultra-short throw mode based on the position of the projection surface 10, the minimum screen size, and the first projection ratio, obtain a second projection position corresponding to the regular mode based on the position of the projection surface 10, the minimum screen size, and the second projection ratio, determine one of the ultra-short throw mode or the regular mode as a target mode based on the first projection position and the second projection position, and control the projection unit 112 to output the projection image to the projection surface 10 according to the target mode.

At least one processor 111 may obtain (or receive) a projection command. At least one processor 111 may obtain a user input including the projection command.

For example, the user input may be obtained through a manipulation interface 115. At least one processor 111 may obtain the user input including the projection command through a physical button included in the operation interface 115.

For example, the user input may be obtained through a microphone 118. At least one processor 111 may obtain a user input including audio data corresponding to the projection command through the microphone 118.

For example, the user input may be obtained through a communication interface 114. At least one processor 111 may obtain user input received from an external device (e.g., a remote control device).

At least one processor 111 may obtain the minimum screen size of the projection image output to the projection surface 10 based on the projection command.

The minimum screen size may indicate a size of an area to which the projection image output to the projection surface 10 is output. The minimum screen size may represent the minimum screen size required to output a projection image in a space where the electronic apparatus 100 is arranged.

The closer the projection image is projected, the smaller the projection image output to the projection surface 10. At least one processor 111 may determine a specific area in the space where the electronic apparatus 100 is arranged as the projection area to which the projection image will be output. At least one processor 111 may require a minimum size of a projection area in determining a projection area for outputting a projection image. This is because, when the minimum screen size is not set, all surfaces may be determined as the projection area.

For example, when the minimum screen size is not set, at least one processor 111 may output the projection image to all surfaces in the space where the electronic apparatus 100 is arranged. This is because, no matter how small a specific area without obstacles is, when the projection image is output from a position close to a specific area, the entire projection image will be output to the specific area. When the projection image is output from a position that is too close and the size of the projection image output to the actual projection surface 10 is small, a user may have difficulty recognizing the projection image.

At least one processor 111 may determine (or identify) the projection position using the minimum screen size so that the user may view the projection image at the minimum size.

Conversely, the maximum screen size may exist. This is because, when the size of the output projection image is too large, the user may not view the projection image. At least one processor 111 may determine the projection position so that the projection image is output to the projection surface 10 at a size larger than the minimum screen size and smaller than the maximum screen size.

According to various embodiments, the maximum screen size may not be used in the process of determining the projection position based on the minimum screen size.

The minimum screen size may be described as a minimum size, a preset size, a threshold size, a projection area size, a size corresponding to the projection area, a minimum projection size, a minimum projection size, or the like.

At least one processor 111 may determine the minimum screen size corresponding to the projection command. At least one processor 111 may determine a minimum screen size based on category information of the projection command.

For example, when the projection command is a command for outputting drama content, a preset first size may be determined as the minimum screen size.

For example, when the projection command is a command for outputting a notification, a preset second size may be determined as the minimum screen size. Preset sizes corresponding to each category information of the projection command may be stored in advance in the memory 113.

At least one processor 111 may determine a projection surface 10 on which the projection image may be output at the minimum screen size. At least one processor 111 may determine at least one candidate projection surface in the space where the electronic apparatus 100 is positioned. At least one processor 111 may determine a final projection surface from among the at least one candidate projection surface.

At least one processor 111 may determine a projection surface that satisfies the minimum screen size from among the plurality of candidate projection surfaces as the final projection surface. When there are a plurality of projection surfaces that satisfy the minimum screen size, at least one processor 111 may determine one projection surface as the final projection surface by using at least one of a user's location, a user's gaze, and a size of the projection surface.

The screen size of the projection image output to the projection surface may be calculated by multiplying the projection ratio (throw ratio) and the projection distance. The projection distance may represent the distance between the projection position and the projection surface position.

At least one processor 111 may identify a projection surface 10 on which the projection image may be output at a minimum screen size among multiple candidate projection surfaces as the final projection surface. At least one processor 111 may output a projection image to the identified projection surface 10. The size of the projection surface 10 may be larger than the minimum screen size.

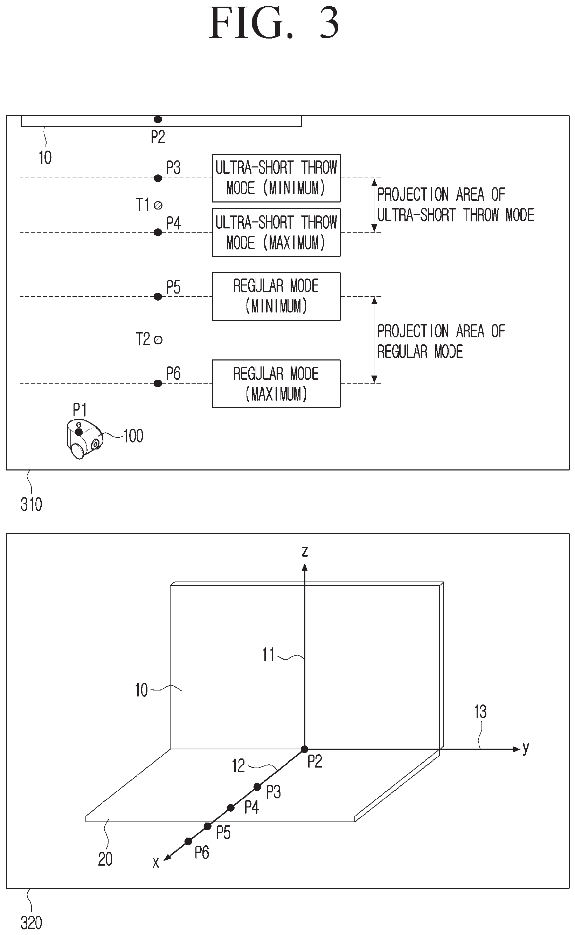

At least one processor 111 may obtain the position of the identified projection surface 10. The position of the projection surface 10 may be position P2 of FIG. 3. The projection surface 10 may represent a projection area or a surface including the projection area. The projection surface 10 may be described as the projection area.

At least one processor 111 may determine a projection position based on the position of the projection surface 10 and the minimum screen size. The position of the projection surface 10 may indicate the position of the area to which the projection image will be output. The projection position may indicate the position of the electronic apparatus 100 that will output the projection image.

At least one processor 111 may first identify the position of the projection surface 10 and then determine the projection position. This is because, when the projection position is identified first, the projection area that satisfies the minimum screen size may not exist.

For example, it is assumed that the projection position has been determined. A suitable projection area for providing the projection image to the user may not exist at the determined projection position. There may be many obstacles around the determined projection position, or the size of the flat surface may be too small. At least one processor 111 may first determine the position of the projection surface 10 before determining the projection position.

At least one processor 111 may identify the projection position at which the projection image may be output at a minimum screen size or larger, based on the position of the projection surface 10.

According to various embodiments, at least one processor 111 may first identify the projection position and determine the projection surface 10 that satisfies the minimum screen size based on the identified projection position. Based on the identified projection position, at least one processor 111 may determine whether there is the projection surface that satisfies the minimum screen size. When there is no projection surface that satisfies the minimum screen size based on the identified projection position, at least one processor 111 may re-identify the projection position.

According to various embodiments, there may be multiple positions of the projection surface 10. The positions of the multiple projection surfaces 10 may be described as a projection surface range.

According to various embodiments, there may be multiple projection positions. The multiple projection positions may be described as a projection range.

At least one processor 111 may determine the projection position based on the position of the projection surface 10, the minimum screen size, and the preset projection ratio. The preset projection ratio may vary depending on the projection lens. At least one processor 111 may obtain the projection ratio stored in the memory 113. The preset projection ratio may include at least one of the first projection ratio in the ultra-short throw mode or the second projection ratio in the regular mode.

An operation of identifying the projection position using the position of the projection surface 10 and the minimum screen size may be applied to an operation of determining the projection position based on the position of the projection surface 10, the minimum screen size, and the preset projection ratio. Duplicate descriptions will be omitted.

At least one processor 111 may obtain (or calculate) the first projection position for outputting the projection image in the ultra-short throw mode based on the position of the projection surface 10, the minimum screen size, and the first projection ratio.

At least one processor 111 may obtain (or calculate) the second projection position for outputting the projection image in the regular mode based on the position of the projection surface 10, the minimum screen size, and the second projection ratio.

At least one processor 111 may determine the target mode using the first projection position associated with the ultra-short throw mode and the second projection position associated with the regular mode. The target mode may indicate the final method for outputting the projection image through the projection unit 112. The target mode may change depending on the calculation process.

The projection unit 112 may be controlled in the ultra-short throw mode or the regular mode. At least one processor 111 may determine one of the ultra-short throw mode or the regular mode as the target mode.

Once the target mode is determined, at least one processor 111 may output the projection image to the projection surface 10 using the determined target mode.

When the ultra-short throw mode is determined as the target mode and the projection unit 112 is currently controlled in the ultra-short throw mode, at least one processor 111 need not change the control mode (or control state).

When the ultra-short throw mode is determined as the target mode and the current projection unit 112 is controlled in the regular mode, at least one processor 111 needs to switch the control mode from the regular mode to the ultra-short throw mode.

When the regular mode is determined as the target mode and the current projection unit 112 is controlled in the regular mode, at least one processor 111 does not need to change the control mode.

When the regular mode is determined as the target mode and the current projection unit 112 is controlled in the ultra-short throw mode, at least one processor 111 needs to switch the control mode from the ultra-short throw mode to the regular mode.

At least one processor 111 may obtain a first predicted time by summing up the first movement time from the current position of the electronic apparatus 100 to the first projection position and a switching time, obtain a second predicted time by summing up a second movement time from the current position of the electronic apparatus 100 to the second projection position and a switching time, and determine the target mode by comparing the first predicted time and the second predicted time.

At least one processor 111 may identify (or sense) the current position of the electronic apparatus 100. At least one processor 111 may obtain a first movement time from the current position of the electronic apparatus 100 to the first projection position. At least one processor 111 may obtain the first predicted time by summing the first movement time and the projection mode switching time.

At least one processor 111 may obtain a second movement time from the current position of the electronic apparatus 100 to the second projection position. At least one processor 111 may obtain the second predicted time by summing the second movement time and the projection mode switching time.

At least one processor 111 may determine the target mode using the first predicted time and the second predicted time. At least one processor 111 may determine the target mode by comparing the predicted times.

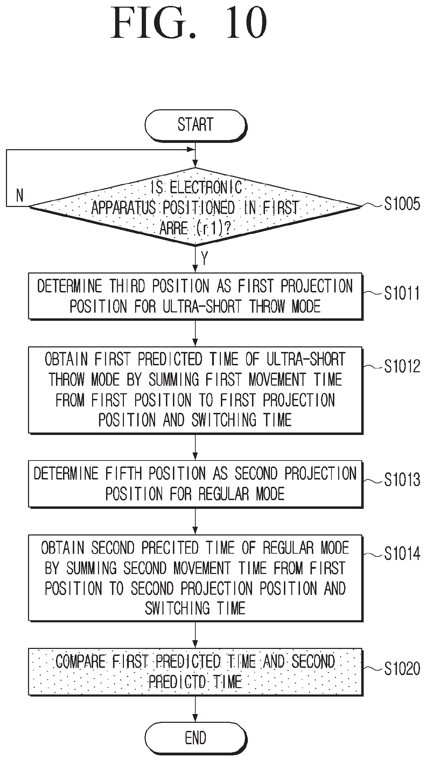

An operation of determining the first projection position, the second projection position, the first predicted time, and the second predicted time is described in FIGS. 10, 13, 18, 20, and 24.

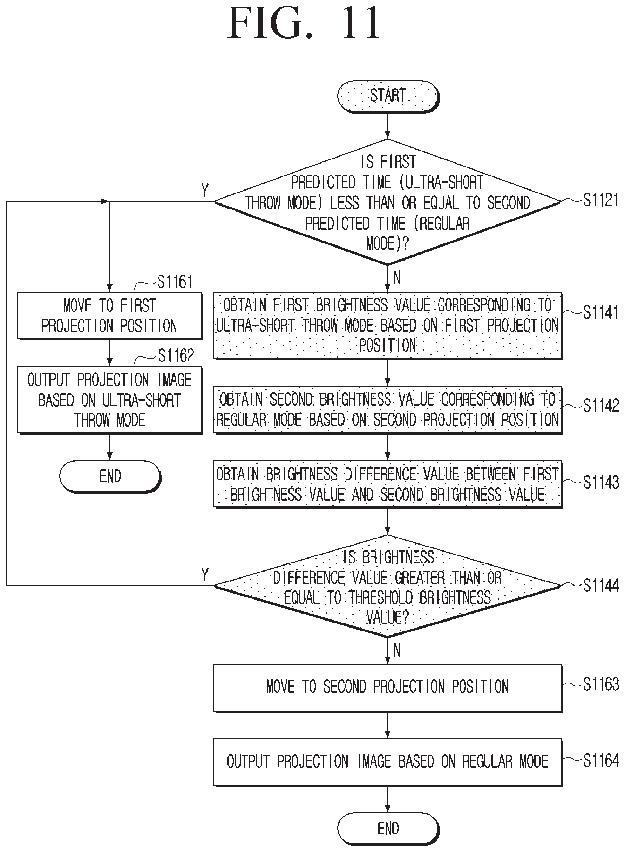

An operation of comparing the predicted times are described in FIGS. 11, 15, and 26.

The switching time may include one of a time for switching from a first state in which the projection unit 112 is controlled in the ultra-short throw mode to a second state in which the projection unit 112 is controlled in regular mode, or a time for switching from the second state to the first state.

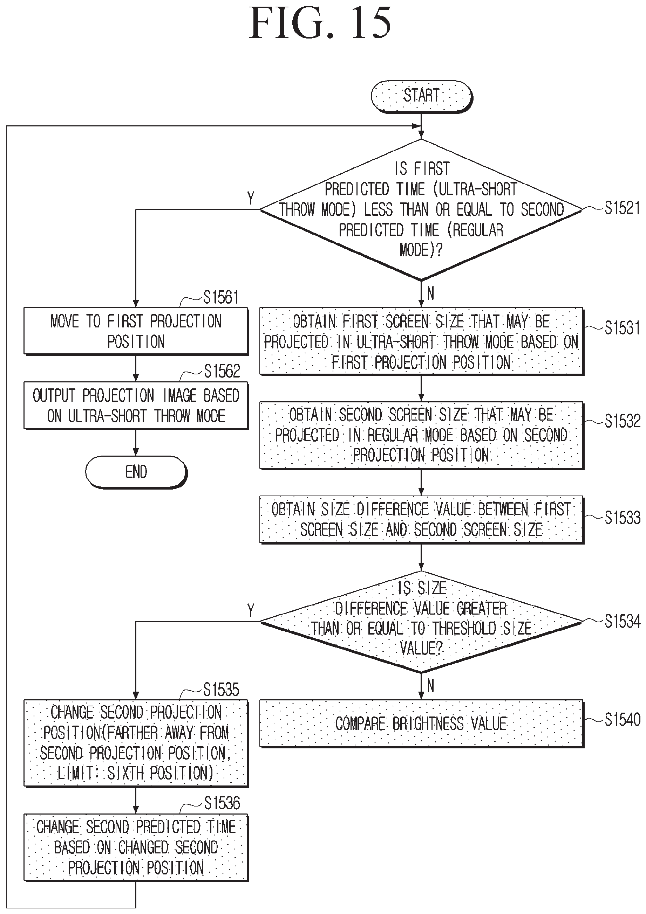

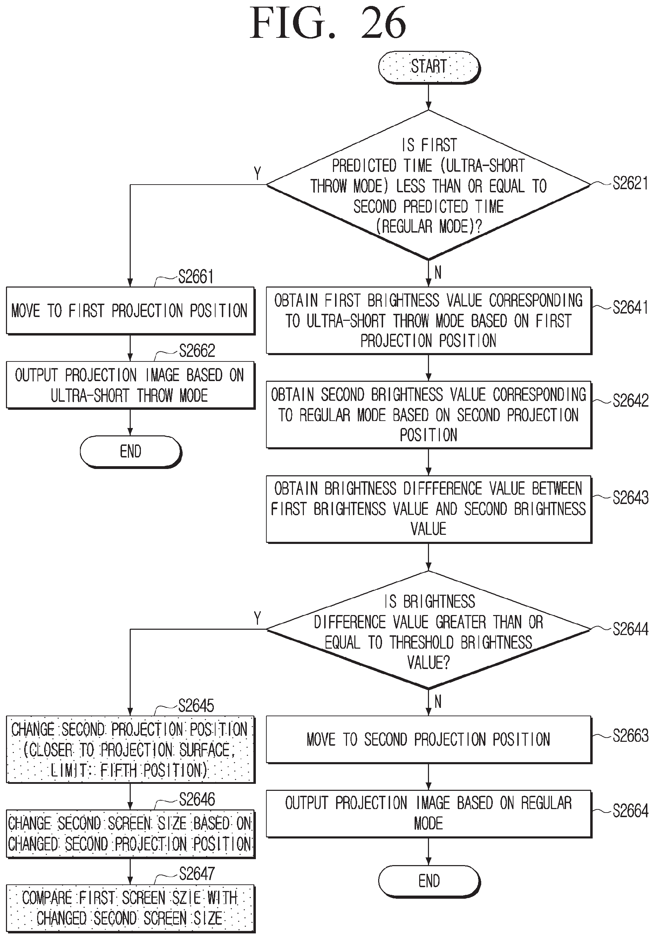

At least one processor 111 may control the projection unit 112 to move to the first projection position and output the projection image to the projection surface 10 based on the ultra-short throw mode when the first predicted time is less than or equal to the second predicted time. When the first predicted time is less than or equal to the second predicted time, at least one processor 111 may determine the target mode as the ultra-short throw mode. A description thereof is provided in steps S1161 and S1162 of FIG. 11, steps S1561 and S1562 of FIG. 15, and steps S2661 and S2662 of FIG. 26.

At least one processor 111 may obtain a first screen size of the projection image to be output to the projection surface 10 in the ultra-short throw mode based on the first projection position, the position of the projection surface 10, and the first projection ratio, and may obtain a second screen size of the projection image to be output to the projection surface 10 in the regular mode based on the second projection position, the position of the projection surface 10, and the second projection ratio, and may determine the target mode by comparing the first screen size and the second screen size.

At least one processor 111 may obtain a distance between the first projection position and the position of the projection surface 10 as a first projection distance. At least one processor 111 may obtain (or calculate) the first screen size by multiplying the projection distance and the first projection ratio.

At least one processor 111 may obtain a distance between the second projection position and the position of the projection surface 10 as a second projection distance. At least one processor 111 may obtain (or calculate) the second screen size by multiplying the projection distance and the second projection ratio.

At least one processor 111 may determine the target mode by comparing screen sizes. The operation of comparing screen sizes is described in FIG. 15.

At least one processor 111 obtains a size difference value between the first screen size and the second screen size, and when the size difference value is greater than or equal to a threshold size value, the second projection position may be changed to be farther away from the projection surface 10. The operation of changing the second projection position to a position farther away from the projection surface 10 may correspond to step S1535 of FIG. 15.

At least one processor 111 may acquire a first brightness value of the projection image to be output to the projection surface 10 in the ultra-short throw mode at the first projection position, acquire a second brightness value of the projection image to be output to the projection surface 10 in the regular mode at the second projection position, and compare the first brightness value and the second brightness value to determine the target mode.

At least one processor 111 may include information in the memory 113 indicating brightness values for each projection distance according to a projection mode. For example, the memory 113 may store information indicating the first brightness value corresponding to the first projection distance.

At least one processor 111 may acquire a projection distance between the first projection position and the position of the projection surface 10. At least one processor 111 may acquire a brightness value corresponding to the projection distance. The brightness value corresponding to the projection distance may vary according to the projection mode.

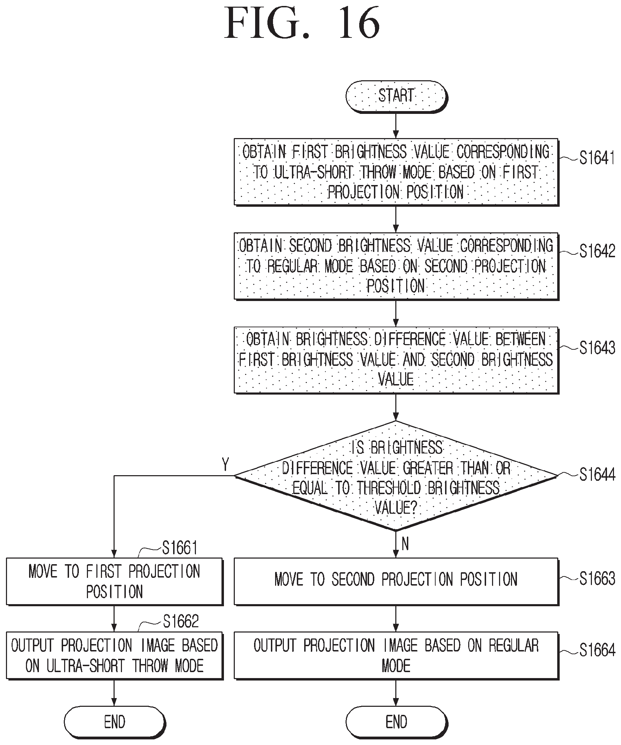

At least one processor 111 may compare the brightness values to determine the target mode. Descriptions related thereto are described in FIG. 16, FIG. 22, and FIG. 26.

At least one processor 111 obtains a brightness difference value between the first brightness value and the second brightness value, and when the brightness difference value is greater than or equal to a threshold brightness value, the second projection position may be changed closer to the projection surface 10.

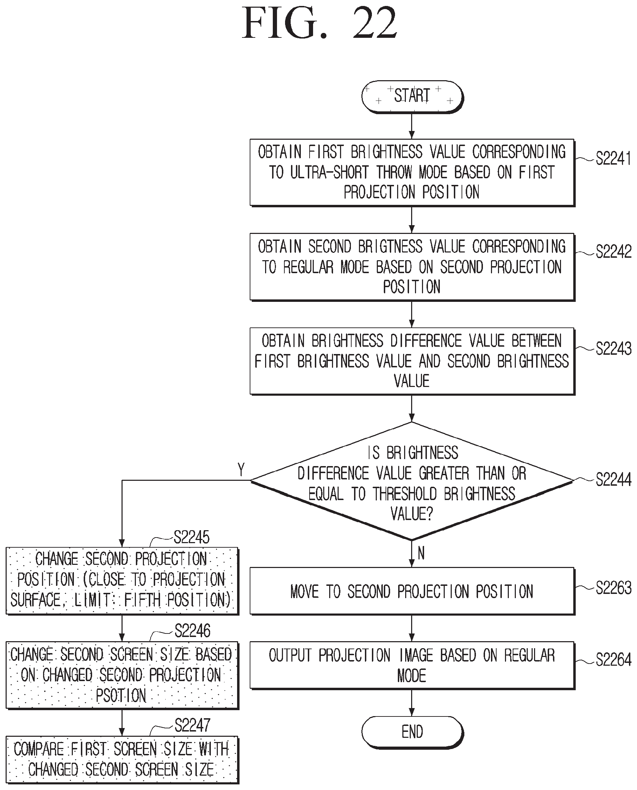

The operation of changing the second projection position closer to the projection surface 10 is described in steps S2245 of FIG. 22 and S2645 of FIG. 26.

At least one processor 111 may obtain a first minimum position in the ultra-short throw mode based on the position of the projection surface 10, the minimum screen size, and the first projection ratio, obtain a first maximum position in the ultra-short throw mode based on the position of the projection surface 10, the size of the projection surface 10, and the first projection ratio, and obtain the first projection position between the first minimum position and the first maximum position.

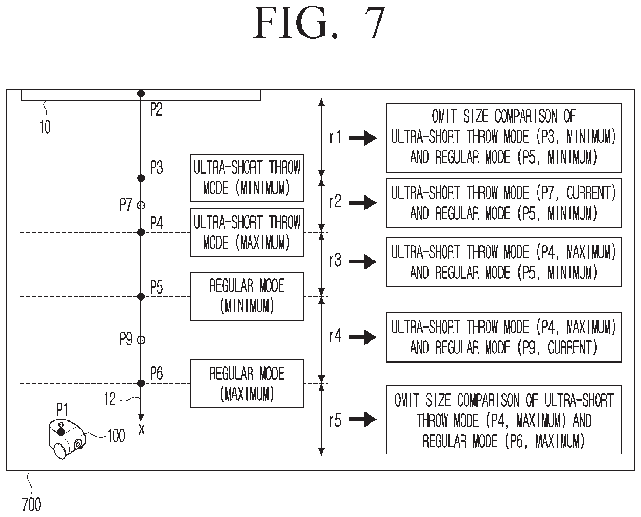

At least one processor 111 may obtain a minimum projection distance corresponding to the ultra-short throw mode based on the minimum screen size and the first projection ratio. At least one processor 111 may determine a position that is a distance from the position of the projection surface 10 by the minimum projection distance as the first minimum position. The first minimum position may correspond to a third position P3 of FIG. 7.

At least one processor 111 may obtain a maximum projection distance corresponding to the ultra-short throw mode based on the size of the projection surface 10 and the first projection ratio. At least one processor 111 may determine a position separated from a position of the projection surface 10 by a maximum projection distance as the first maximum position. The first maximum position may correspond to a fourth position P4 of FIG. 7.

At least one processor 111 may obtain the first projection position corresponding to the ultra-short throw mode between the first minimum position and the first maximum position.

At least one processor 111 may obtain a second minimum position in the ultra-short throw mode based on the position of the projection surface 10, the minimum screen size, and the second projection ratio, obtain a second maximum position in the regular mode based on the position of the projection surface 10, the size of the projection surface 10, and the second projection ratio, and obtain the second projection position between the second minimum position and the second maximum position.

At least one processor 111 may obtain the minimum projection distance corresponding to the regular mode based on the minimum screen size and the second projection ratio. At least one processor 111 may determine a position that is a distance from the position of the projection surface 10 by the minimum projection distance as the second minimum position. The second minimum position may correspond to a fifth position P**5** of FIG. 7.

At least one processor 111 may obtain a maximum projection distance corresponding to the regular mode based on the size of the projection surface 10 and the second projection ratio. At least one processor 111 may determine a position separated from a position of the projection surface 10 by the maximum projection distance as the second maximum position. The second maximum position may correspond to the sixth position P6 of FIG. 7.

At least one processor 111 may obtain the second projection position corresponding to the regular mode between the second minimum position and the second maximum position.

A description related thereto is described with reference to FIGS. 2 and 7.

The electronic apparatus 100 may determine the target mode by operations of comparing estimated times, screen sizes, and brightness values based on the first and second projection positions. By automatically determining the ultra-short throw mode or the regular mode through various comparison operations, the electronic apparatus 100 may provide the user with an optimal target mode.

According to various embodiments, the electronic apparatus 100 may determine the projection position while being able to apply both ultra-short throw mode and regular mode. The electronic apparatus 100 may acquire the first projection position corresponding to ultra-short throw mode and a projection position corresponding to regular mode. The electronic apparatus 100 may determine an appropriate position among the first and second projection positions and output the projection image in a manner corresponding to the determined position.

According to various embodiments, only one of the first or second projection positions may be used. The electronic apparatus 100 may first determine any one (target mode) of the ultra-short throw mode or the regular mode. The target mode may be determined by the user's selection. When the user input for determining the target mode is received, the electronic apparatus 100 may identify the projection position corresponding to the target mode.

FIG. 2 is a block diagram for describing a specific configuration of the electronic apparatus 100 of FIG. 1 according to an embodiment.

Referring to FIG. 2, the electronic apparatus 100 may include at least one of at least one processor 111, a projection unit 112, a memory 113, a communication interface 114, a manipulation interface 115, an input/output interface 116, a speaker 117, a microphone 118, a power supply unit 119, a driving unit 120, a sensor unit 121, or a moving member 122.

The components illustrated in FIG. 2 are merely various embodiments, and some components may be omitted, and new components may be added.

Contents already described in FIG. 1 are omitted.

At least one processor 111 may be implemented by a digital signal processor (DSP), a microprocessor, or a time controller (TCON) that processes a digital signal. However, the processor 120 is not limited thereto, but may include one or more of a central processing unit (CPU), a micro controller unit (MCU), a micro processing unit (MPU), a controller, an application processor (AP), a graphics-processing unit (GPU), a communication processor (CP), and an advanced reduced instruction set computer (RISC) machines (ARM) processor, or may be defined by these terms. At least one processor 111 may be implemented by a system-on-chip (SoC) or a large scale integration (LSI) in which a processing algorithm is embedded, or may be implemented in a field programmable gate array (FPGA) form. At least one processor 111 may perform various functions by executing computer executable instructions stored in the memory 113.

The projection unit 112 is a component that projects an image to the outside. According to various embodiments of the present disclosure, the projection unit 112 may be implemented with various projection modes (for example, a cathode-ray tube (CRT) method, a liquid crystal display (LCD) method, a digital light processing (DLP) method, a laser method, etc.). For example, the CRT method has the same principle as a CRT monitor. The CRT method displays an image on a screen by magnifying an image with a lens in front of a cathode-ray tube (CRT). Depending on the number of cathode-ray tubes, the CRT is divided into a single-tube type and a three-tube type. In the case of the three-tube type, red, green, and blue cathode-ray tubes may be implemented separately.

As another example, the LCD method is a method of displaying an image by transmitting light from a light source to a liquid crystal. The LCD method is divided into a single-plate type and a three-plate type. In the case of the three-plate type, light from a light source may be separated into red, green, and blue by a dichroic mirror (a mirror that reflects only a specific color of light and transmits the rest), transmit the liquid crystal, and then focused back into a single point.

As another example, the DLP method is a method of displaying an image using a digital micromirror device (DMD) chip. The DLP type of projection unit may include a light source, a color wheel, a DMD chip, a projection lens, etc. Light output from the light source may be colored as it passes through a rotating color wheel. The light passing through the color wheel is input to the DMD chip. The DMD chip includes numerous micromirrors and reflects light input to the DMD chip. The projection lens may serve to magnify the light reflected from the DMD chip to the image size.

As another example, the laser method includes a diode pumped solid state (DPSSS) laser and a galvanometer. Lasers that output various colors use three DPSS lasers, one for each RGB color installed separately, and then employ special mirrors to overlap their optical axes. The galvanometer includes a mirror and a high-power motor to move a mirror at high speeds. For example, the galvanometer may rotate a mirror at up to 40 kHz/sec. The galvanometer is mounted according to a scan direction. Generally, since the projector performs planar scanning, the galvanometer may also be arranged separately along x and y axes.

The projection unit 112 may include various types of light sources. For example, the projection unit 112 may include at least one light source of a lamp, an LED, and a laser.

The projection unit 112 may output images with a 4:3 aspect ratio, a 5:4 aspect ratio, or a 16:9 wide aspect ratio, depending on the purpose of the electronic apparatus 100 or the user's settings, and may output images with various resolutions, such as WVGA (854*480), SVGA (800*600), XGA (1024*768), WXGA (1280*720), WXGA (1280*800), SXGA (1280*1024), UXGA (1600*1200), and Full HD (1920*1080), depending on the aspect ratio.

The projection unit 112 may perform various functions for adjusting the output image under the control of at least one processor 111. For example, the projection unit 112 may perform functions such as zoom, keystone, quick corner (4-corner) keystone, and lens shift.

Specifically, the projection unit 112 may magnify or reduce the image depending on the distance (projection distance) from the screen. In other words, the zoom function may be performed depending on the distance from the screen. In this case, the zoom function may include a hardware method that adjusts the screen size by moving the lens, a software method that adjusts the screen size by cropping the image, etc. When the zoom function is performed, the image focus needs to be adjusted. For example, the methods of adjusting a focus include manual focus, motorized focus, etc. The manual focus method refers to a method of manually adjusting a focus, while the motorized focus refers to a method in which the projector automatically focuses using a built-in motor when the zoom function is performed. When performing the zoom function, the projection unit 112 may provide a digital zoom function through software, and an optical zoom function that performs the zoom function by moving the lens through the driving unit 120.

The projection unit 112 may perform a keystone correction function. When the height is not suitable for frontal projection, the screen may be distorted upward or downward. The keystone correction function refers to a function of correcting the distorted screen. For example, when distortion occurs in a horizontal direction of the screen, horizontal keystone correction may be used, and when distortion occurs in a vertical direction of the screen, vertical keystone correction may be used. The quick corner (4-corner) keystone correction function is a function of correcting a screen when a center area of the screen is normal but corner areas are unbalanced. A lens shift function is a function that shifts an image as it is when the image extends beyond a screen.

The projection unit 112 may automatically analyze the ambient environment and projection environment without a user input to provide zoom/keystone/focus functions. Specifically, the projection unit 112 may automatically provide zoom/keystone/focus functions based on the distance between the electronic apparatus 100 and the screen detected by a sensor (depth camera, distance sensor, infrared sensor, light sensor, etc.), information about the space where the electronic apparatus 100 is currently positioned, information about the amount of ambient light, etc.

The projection unit 112 may provide a lighting function using a light source. In particular, the projection unit 112 may provide a lighting function by outputting a light source using an LED. According to various embodiments, the projection unit 112 may include one LED, and according to another embodiment, the electronic apparatus 100 may include multiple LEDs. Depending on the implementation example, the projection unit 112 may output a light source using a surface-emitting LED. The surface-emitting LED may mean an LED having a structure in which an optical sheet is arranged on the upper side of the LED so that the light source is evenly distributed and output. Specifically, when a light source is output through an LED, the light source may be evenly distributed through an optical sheet, and the light source distributed through the optical sheet may be incident on the display panel.

The projection unit 112 may provide a dimming function to adjust the intensity of the light source to the user. Specifically, when the user input for adjusting the intensity of the light source is received from the user through the manipulation interface 115 (e.g., a touch display button or dial), the projection unit 112 may control the LED to output the intensity of the light source corresponding to the received user input.

The projection unit 112 may provide the dimming function based on content analyzed by at least one processor 111 without the user input. Specifically, the projection unit 112 may control the LED to output the intensity of the light source based on information (e.g., content type, content brightness, etc.) about the currently provided content.

The projection unit 112 may control the color temperature under the control of at least one processor 111. At least one processor 111 may control the color temperature based on the content. Specifically, when the content is identified to be output, at least one processor 111 may obtain frame-by-frame color information of the content whose output has been determined. Then, at least one processor 111 may control the color temperature based on the obtained frame-by-frame color information. At least one processor 111 may obtain at least one primary color of the frame based on the frame-by-frame color information. Then, at least one processor 111 may adjust the color temperature based on the obtained one or more primary colors. For example, the color temperature that at least one processor 111 may adjust may be classified into a warm type or a cold type. It is assumed that a frame (hereinafter, output frame) to be output includes a scene where a fire has occurred. At least one processor 111 may identify (or obtain) that the primary color is red based on the color information included in the current output frame. In addition, at least one processor 111 may identify a color temperature corresponding to the identified primary color (red). The color temperature corresponding to red may be a warm type. At least one processor 111 may utilize an artificial intelligence model to obtain color information or a primary color of the frame. According to various embodiments, the artificial intelligence model may be stored in the electronic apparatus 100 (e.g., memory 113). According to other embodiments, the artificial intelligence model may be stored in the external server capable of communicating with the electronic apparatus **10**0.

The memory 113 may be implemented by an internal memory such as a read-only memory (ROM) (for example, an electrically erasable programmable read-only memory (EEPROM)), a random access memory (RAM), or the like, included in at least one processor 111 or be implemented by a memory separate from at least one processor 111. In this case, the memory 113 may be implemented in a form of a memory embedded in the electronic apparatus 100 or a form of a memory attachable to and detachable from the electronic apparatus 100, depending on a data storing purpose. For example, data for traveling the electronic apparatus 100 may be stored in the memory embedded in the electronic apparatus 100, and data for an extension function of the electronic apparatus 100 may be stored in the memory attachable to and detachable from the electronic apparatus **10**0.

The memory embedded in the electronic apparatus 100 may be implemented by at least one of a volatile memory (for example, a dynamic RAM (DRAM), a static RAM (SRAM), a synchronous dynamic RAM (SDRAM), or the like) or a nonvolatile memory (for example, a one time programmable ROM (OTPROM), a programmable ROM (PROM), an erasable and programmable ROM (EPROM), an electrically erasable and programmable ROM (EEPROM), a mask ROM, a flash ROM, a flash memory (for example, a NAND flash, a NOR flash, or the like), a hard drive, or a solid state drive (SSD)), and the memory attachable to and detachable from the electronic apparatus 100 may be implemented in a form such as a memory card (for example, a compact flash (CF), a secure digital (SD), a micro-SD, a mini-SD, an extreme digital (xD), a multi-media card (MMC), or the like), an external memory (for example, a universal serial bus (USB) memory) connectable to a USB port, or the like.

At least one command related to the electronic apparatus 100 may be stored in the memory 113. The memory 113 may store an operating system (O/S) for traveling the electronic apparatus 100. The memory 113 may store various software programs or applications for operating the electronic apparatus 100 according to various embodiments of the present disclosure. The memory 113 may include a semiconductor memory such as a flash memory, or a magnetic storage medium such as a hard disk, or the like.

Specifically, various software modules for operating the electronic apparatus 100 according to various embodiments of the present disclosure may be stored in the memory 113, and at least one processor 111 may execute various software modules stored in the memory 113 to control the operation of the computing device 100. That is, the memory 113 is accessed by at least one processor 111, and readout/recording/correction/deletion/update, and the like, of data in the memory 110 may be performed by at least one processor 111.

In the present disclosure, the term 'memory' may be used as meaning including the memory 113, a read only memory (ROM) (not illustrated) in at least one processor 111, a random access memory (RAM) (not illustrated), or a memory card (not illustrated) (for example, a micro secure digital (SD) card or a memory stick) mounted in the electronic apparatus 100.

The communication interface 114 is a component performing communication with various types of external apparatuses depending on various types of communication manners. The communication interface 114 may include a wireless communication module or a wired communication module. Each communication module may be implemented in the form of at least one hardware chip.

The wireless communication module may be a module that wirelessly communicates with an external device. For example, the wireless communication module may include at least one of a Wi-Fi module, a Bluetooth module, an infrared communication module, or other communication modules.

The Wi-Fi module and the Bluetooth module may perform communication in the Wi-Fi method and the Bluetooth method, respectively. In the case of using the Wi-Fi module or the Bluetooth module, various connection information such as a service set identifier (SSID), a session key, and the like, is first transmitted and received, communication is connected using the connection information, and various information may then be transmitted and received.

The infrared communication module performs communication according to an infrared data association (IrDA) technology of wirelessly transmitting data to a short distance using an infrared ray disposed between a visible ray and a millimeter wave.

Other wireless communication modules may include at least one communication chip performing communication according to various wireless communication standards such as zigbee, 3^{rd} generation (3G), 3^{rd} generation partnership project (3GPP), long term evolution (LTE), LTE advanced (LTE-A), 4^{th} generation (4G), 5^{th} generation (5G), and the like, in addition to the communication manner described above.

The wired communication module may be a module that communicates with an external device in a wired manner. For example, the wired communication module may include at least one of a local area network (LAN) module, an Ethernet module, a pair cable, a coaxial cable, an optical fiber cable, or an ultra wide-band (UWB) module.

The manipulation interface 115 may include various types of input devices. For example, the manipulation interface 115 may include a physical button. In this case, the physical button may include a function key, a directional key (e.g., a four-way key), or a dial button. According to various embodiments, the physical button may be implemented as multiple keys. According to other embodiments, the physical button may be implemented as one key. When the physical button is implemented as one key, the electronic apparatus 100 may receive a user input in which one key is pressed for a threshold time or longer. When the user input in which one key is pressed for the threshold time or longer is received, at least one processor 111 may perform a function corresponding to the user input. For example, at least one processor 111 may provide a lighting function based on the user input.

The manipulation interface 115 may receive a user input using a non-contact method. When receiving a user input using a contact method, physical force should be transmitted to the electronic apparatus 100. Therefore, a method for controlling the electronic apparatus 100 regardless of physical force may be required. Specifically, the manipulation interface 115 may receive user gestures and perform operations corresponding to the received user gestures. The manipulation interface 115 may receive user gestures through a sensor (e.g., an image sensor or an infrared sensor).

The manipulation interface 115 may receive a user input using a touch method. For example, the manipulation interface 115 may receive a user input through a touch sensor. According to various embodiments, the touch method may be implemented in a non-contact manner. For example, the touch sensor may determine whether a user's body has approached within a threshold distance. The touch sensor may identify the user input even when the user does not make contact with the touch sensor. According to another implementation example, the touch sensor may identify the user input by a user touching the touch sensor.

The electronic apparatus 100 may receive the user input in various ways in addition to the above-described manipulation interface 115. In various embodiments, the electronic apparatus 100 may receive the user input through an external remote control device. The external remote control device may be a remote control device corresponding to the electronic apparatus 100 (e.g., a dedicated control device for the electronic apparatus 100) or a user's portable communication device (e.g., a smartphone or wearable device). The user's portable communication device may store an application for controlling the electronic apparatus 100. The portable communication device may obtain the user input through the stored application and transmit the obtained user input to the electronic apparatus 100. The electronic apparatus 100 may receive the user input from the portable communication device and perform an operation corresponding to the user's control command.

The electronic apparatus 100 may receive the user input using voice recognition. According to various embodiments, the electronic apparatus 100 may receive a user voice through a microphone included in the electronic apparatus 100. According to other embodiments, the electronic apparatus 100 may receive a user voice from a microphone or an external device. Specifically, the external device may obtain a user voice through a microphone of the external device and transmit the obtained user voice to the electronic apparatus 100. The user voice transmitted from the external device may be audio data or digital data (e.g., audio data converted into a frequency domain, etc.) converted from audio data. The electronic apparatus 100 may perform an operation corresponding to the received user voice. Specifically, the electronic apparatus 100 may receive the audio data corresponding to the user voice through the microphone. Then, the electronic apparatus 100 may convert the received audio data into the digital data. Then, the electronic apparatus 100 may convert the converted digital data into text data using a speech to text (STT) function. According to various embodiments, the STT function may be performed directly on the electronic apparatus 100.

According to other embodiments, the STT function may be performed on the external server. The electronic apparatus 100 may transmit the digital data to the external server. The external server may convert the digital data into the text data and obtain control command data based on the converted text data. The external server may transmit the control command data (which may also include text data) to the electronic apparatus 100. The electronic apparatus 100 may perform an operation corresponding to the user voice based on the obtained control command data.

The electronic apparatus 100 may provide a voice recognition function using a single assistant (or an artificial intelligence assistant) However, these are merely various embodiments, and a voice recognition function may be provided through multiple assistants. In this case, the electronic apparatus 100 may provide a voice recognition function by selecting one of multiple assistants based on a trigger word corresponding to the assistant or a specific key present on the remote control.

The electronic apparatus 100 may receive the user input using screen interaction. The screen interaction may refer to a function of identifying whether a predetermined event occurs through an image projected by the electronic apparatus 100 on a screen (or projection surface) and obtaining the user input based on the predetermined event. The predetermined event may refer to an event in which a predetermined object is identified at a specific position (e.g., a position at which a UI for receiving the user input is projected). The predetermined object may include at least one of part (e.g., a finger) of the user's body, a pointer, or a laser point. When the predetermined object is identified at the position corresponding to the projected UI, the electronic apparatus 100 may identify that the user input for selecting the projected UI has been received. For example, the electronic apparatus 100 may project a guide image to display a UI on the screen. Then, the electronic apparatus 100 may identify whether the user selects the projected UI. Specifically, the electronic apparatus 100 may identify that the user has selected the projected UI when the predetermined event is identified at the position of the projected UI. The projected UI may include at least one item. The electronic apparatus 100 may perform spatial analysis to identify whether the predetermined event is at the position of the projected UI. The electronic apparatus 100 may perform spatial analysis through a sensor (e.g., an image sensor, an infrared sensor, a depth camera, a distance sensor, etc.). By performing the spatial analysis, the electronic apparatus 100 may identify whether the predetermined event occurs at a specific position (position at which the UI is projected). When it is identified that a predetermined event has occurred at a specific position (position at which the UI is projected), the electronic apparatus 100 may identify that a user input for selecting a UI corresponding to a specific position is received.

The input/output interface 116 is configured to input/output at least one of an audio signal and an image signal. The input/output interface 116 may receive at least one of an audio signal and an image signal from an external device and output control commands to the external device.

According to the implementation example, the input/output interface 116 may be implemented as an interface that inputs/outputs only the audio signal and an interface that inputs/outputs only the image signal, or implemented as a single interface that inputs/outputs both the audio signal and image signal.

According to various embodiments of the present disclosure, the input/output interface 116 may be implemented as a wired input/output interface of at least one of a high definition multimedia interface (HDMI), a mobile high-definition link (MHL), a universal serial bus (USB), a USB C-type, a display port (DP), Thunderbolt, a video graphics array (VGA) port, an RGB port, a D-subminiature (D-SUB), and a digital visual interface (DVI). According to various embodiments, the wired input/output interface may be implemented as an interface that inputs/outputs only the audio signal and an interface that inputs/outputs only the image signal, or implemented as a single interface that inputs/outputs both the audio signal and image signal.

The electronic apparatus 100 may receive data through the wired input/output interface, which is merely various embodiments, and may be supplied with power through the wired input/output interface. For example, the electronic apparatus 100 may be supplied with power from an external battery via the USB C-type or power from an outlet via a power adapter. As another example, the electronic apparatus 100 may be supplied with power from an external device (e.g., a laptop, a monitor, etc.) via a DP.

The electronic apparatus 100 may be configured such that the audio signal is input through the wired input/output interface, and the image signal is input through the wireless input/output interface (or communication interface). Alternatively, the electronic apparatus 100 may be configured such that the audio signal is input through the wireless input/output interface (or communication interface), and the image signal is input through the wired input/output interface.

The speaker 117 is a component that outputs audio signals. In particular, the speaker 117 may include an audio output mixer, an audio signal processor, and an acoustic output module. The audio output mixer may synthesize multiple audio signals to be output into at least one audio signal. For example, the audio output mixer may synthesize an analog audio signal and another analog audio signal (e.g., an analog audio signal received from an external source) into at least one analog audio signal. The acoustic output module may include a speaker or an output terminal. According to various embodiments, the acoustic output module may include multiple speakers. In this case, the acoustic output module may be arranged inside a main body, and sound emitted by covering at least a portion of a diaphragm of the acoustic output module may pass through a waveguide and be transmitted to the outside of the main body. The acoustic output module includes multiple audio output units, and the multiple audio output units are arranged symmetrically on the exterior of the main body, thereby emitting sound in all directions, i.e., 360°.

The microphone 118 is a component for receiving the user voice or other sounds and converting the user voice or other sounds into audio data. The microphone 118 may receive the user voice in an activated state. For example, the microphone 118 may be formed integrally on an upper side or in a front direction, a side direction, etc., of the electronic apparatus 100. The microphone 118 may include various configurations such as a microphone that collects user voices in analog form, an amplifier circuit that amplifies the collected user voices, an A/D conversion circuit that samples the amplified user voices and converts the amplified user voices into digital signals, and a filter circuit that removes noise components from the converted digital signals.

The power supply unit 119 may be supplied with power from the outside and supply power to various components of the electronic apparatus 100. The power supply unit 119 according to various embodiments of the present disclosure may be supplied with power through various methods. In various embodiments, the power supply unit 119 may be supplied with power using a connector 130 as illustrated in FIG. 1. The power supply unit 119 may be supplied with power using a 220V DC power cord. However, the power supply unit 119 is not limited thereto, and may be supplied with power using a USB power cord or a wireless charging method.

The power supply unit 119 may be supplied with power using an internal battery or an external battery. The power supply unit 119 according to various embodiments of the present disclosure may be supplied with power through the internal battery. For example, the power supply unit 119 may charge the power of the internal battery using at least one of a 220V DC power cord, a USB power cord, and a USB C-Type power cord, and may be supplied with power through the charged internal battery. The power supply unit 119 according to various embodiments of the present disclosure may be supplied with power through the external battery. For example, when the electronic apparatus 100 is connected to the external battery through various wired communication methods such as a USB power cord, a USB C-Type power cord, or a socket home, the power supply unit 119 may be supplied with power through the external battery. That is, the power supply unit 119 may be supplied with power directly from the external battery, or may charge the internal battery through the external battery and then be supplied with power from the charged internal battery.

The power supply unit 119 according to the present disclosure may be supplied with power using at least one of the multiple power supply methods described above.

Regarding power consumption, the electronic apparatus 100 may have power consumption of less than a preset value (e.g., 43 W) due to factors such as the socket type and other standards. In this case, the electronic apparatus 100 may vary power consumption to reduce power consumption when using a battery. That is, the electronic apparatus 100 may vary power consumption based on the power supply method, power usage, etc.

The driving unit 120 may drive at least one hardware component included in the electronic apparatus 100. The driving unit 120 may generate physical force and transmit the physical force to at least one hardware component included in the electronic apparatus **10**0.

The driving unit 120 may generate driving power for the movement of hardware components included in the electronic apparatus 100 (e.g., movement of the electronic apparatus 100) or rotation of the components (e.g., rotation of the projection lens).

The driving unit 120 may adjust the projection direction (or projection angle) of the projection unit 112. The driving unit 120 may move the position of the electronic apparatus 100. The driving unit 120 may control the moving member to move the electronic apparatus 100. For example, the driving unit 120 may control the moving member using the motor.

The sensor unit 121 may include at least one sensor. Specifically, the sensor unit 121 may include at least one of a tilt sensor for sensing a tilt of the electronic apparatus 100 and an image sensor for capturing an image. The tilt sensor may be an acceleration sensor or a gyro sensor, and the image sensor may refer to a camera or a depth camera. The tilt sensor may be described as a motion sensor. The sensor unit 121 may include various sensors in addition to the tilt sensor or the image sensor. For example, the sensor unit 121 may include an illuminance sensor and a distance sensor. The distance sensor may be a time of flight (ToF). The sensor unit 121 may include a LiDAR sensor.

The electronic apparatus 100 may control a lighting function in conjunction with an external device. Specifically, the electronic apparatus 100 may receive lighting information from the external device. The lighting information may include at least one of brightness information and color temperature information set by the external device. The external device may refer to a device (e.g., an IoT device included in the same home/work network) connected to the same network as the electronic apparatus 100 or may refer to a device (for example, a remote control server) that is not on the same network as the electronic apparatus 100 but is capable of communicating with the electronic apparatus 100. For example, it is assumed that an external lighting device (IoT device) included in the same network as the electronic apparatus 100 is outputting red light at a brightness of 50. The external lighting device (IoT device) may directly or indirectly transmit lighting information (e.g., information representing that it is outputting red light at a brightness of 50) to the electronic apparatus 100. The electronic apparatus 100 may control the output of the light source based on the lighting information received from the external lighting device. For example, when the lighting information received from the external lighting device includes information representing that red light is output at a brightness of 50, the electronic apparatus 100 may output red light at a brightness of 50.

The electronic apparatus 100 may control the lighting function based on biometric information. Specifically, at least one processor 111 may obtain user's biometric information. The biometric information may include at least one of user's body temperature, heart rate, blood pressure, respiration, and electrocardiogram. The biometric information may include various information in addition to the information described above. For example, the electronic apparatus 100 may include a sensor for measuring biometric information. At least one processor 111 may obtain the user's biometric information through the sensor and control the output of the light source based on the obtained biometric information. As another example, at least one processor 111 may receive the biometric information from an external device via the input/output interface 116. The external device may refer to the user's portable communication device (e.g., a smartphone or a wearable device). At least one processor 111 may obtain the user's biometric information from the external device and control the output of the light source based on the obtained biometric information. According to an implementation example, the electronic apparatus 100 may identify whether the user is sleeping, and when the user is identified as sleeping (or preparing for sleep), at least one processor 111 may control the output of the light source based on the user's biometric information.

The electronic apparatus 100 according to various embodiments of the present disclosure may provide various smart functions.

Specifically, the electronic apparatus 100 is connected to a portable terminal device for controlling the electronic apparatus 100, and the screen output from the electronic apparatus 100 may be controlled through the user input that is input from the portable terminal device. As an example, the portable terminal device may be implemented as a smartphone including a touch display, and the electronic apparatus 100 receives and outputs screen data provided by the portable terminal device from the portable terminal device, and the screen output from the electronic apparatus 100 may be controlled according to the user input that is input from the portable terminal device.

The electronic apparatus 100 may be connected to a mobile terminal device via various communication methods, such as Miracast, Airplay, wireless DEX, and Remote PC, thereby sharing content or music provided by the mobile terminal device.

The mobile terminal device and the electronic apparatus 100 may be connected via various connection methods. In various embodiments, the mobile terminal device may search for the electronic apparatus 100 to perform a wireless connection, or the electronic apparatus 100 may search for the mobile terminal device to perform a wireless connection. Furthermore, the electronic apparatus 100 may output content provided by the mobile terminal device.

In various embodiments, in a state in which the mobile terminal device is currently outputting specific content or music, when the mobile terminal device may be placed near the electronic apparatus 100 and then a preset gesture (e.g., a motion tap view) is detected on the display of the mobile terminal device, the electronic apparatus 100 may output the content or music being output by the mobile terminal device.

In various embodiments, the mobile terminal device comes closer to the electronic apparatus 100 to a preset distance or less (e.g., a non-contact tap view) or the mobile terminal device comes into contact with the electronic apparatus 100 twice within a short interval (e.g., a contact tap view) while the mobile terminal device is outputting specific content or music, the electronic apparatus 100 may output the content or music being output on the mobile terminal device.

The above-described embodiments described that the electronic apparatus 100 provides a screen identical to the screen provided by the mobile terminal device. However, the present disclosure is not limited thereto. That is, when a connection is established between the mobile terminal device and the electronic apparatus 100, the mobile terminal device may output a first screen provided by the mobile terminal device, and the electronic apparatus 100 may output a second screen provided by the mobile terminal device, which is different from the first screen. For example, the first screen may be a screen provided by a first application installed on the mobile terminal device, and the second screen may be a screen provided by a second application installed on the mobile terminal device. For example, the first screen and the second screen may be different screens provided by a single application installed on the mobile terminal device. For example, the first screen may include a remote control-style UI for controlling the second screen.

The electronic apparatus 100 according to the present disclosure may output a standby screen. For example, when the electronic apparatus 100 is not connected to an external device or when no input is received from the external device for a preset period of time, the electronic apparatus 100 may output the standby screen. The conditions for the electronic apparatus 100 to output the standby screen are not limited to the examples described above, and the standby screen may be output under various conditions.

The electronic apparatus 100 may output the standby screen in the form of a blue screen, but the present disclosure is not limited thereto. For example, the electronic apparatus 100 may extract only the shape of a specific object from data received from an external device to obtain an amorphous object, and output the standby screen including the obtained amorphous object.

The electronic apparatus 100 may further include a display (not illustrated).

The display (not illustrated) may be implemented by various types of displays such as a liquid crystal display (LCD), an organic light emitting diode (OLED) display, a plasma display panel (PDP), and the like. A driving circuit, a backlight unit, and the like, that may be implemented in a form such as an amorphous silicon thin film transistor (a-si TFT), a low temperature poly silicon (LTPS) TFT, an organic TFT (OTFT), and the like, may be included in the display (not illustrated). The display (not illustrated) may be implemented as a touch screen coupled with a touch sensor, a flexible display, a three-dimensional display (3D display), etc. According to various embodiments of the present disclosure, the display (not illustrated) may include not only a display panel that outputs an image, but also a bezel that houses the display panel. In particular, according to various embodiments of the present disclosure, the bezel may include a touch sensor (not illustrated) for detecting user interaction.

The electronic apparatus 100 may further include a shutter unit (not illustrated).

The shutter unit (not illustrated) may include at least one of a shutter, a fixing member, a rail, or a body.

The shutter may block light output from the projection unit 112. The fixing member may fix the position of the shutter. The rail may be a path for moving the shutter and the fixed member. The body may be a structure including the shutter and the fixed member.

The moving member 122 may refer to a member for moving from the first position to the second position in the space where the electronic apparatus 100 is arranged. The electronic apparatus 100 may control the moving member 122 to move the electronic apparatus 100 using the force generated by the driving unit 120. The electronic apparatus 100 may generate force to be transmitted to the moving member 122 using the motor included in the driving unit 120.

The moving member 122 may include at least one wheel (e.g., a circular wheel). The electronic apparatus 100 may move to a target position (or designated position) via the moving member. When the user input or control command is received, the electronic apparatus 100 may rotate the moving member by transmitting force generated through the motor to the moving member. The electronic apparatus 100 may control the moving member to adjust a rotation speed, a rotation direction, etc. The electronic apparatus 100 may perform a movement operation (or movement function) by controlling the moving member based on the target position, a direction of travel, etc.

FIG. 3 is a diagram describing the first projection position and the second projection position, according to an embodiment.

Referring to embodiment 310 of FIG. 3, the electronic apparatus 100 may identify the current position of the electronic apparatus 100. The current position of the electronic apparatus 100 may be described as a first position P1. The electronic apparatus 100 may identify the position of the projection surface 10. The position of the projection surface 10 may be described as a second position P2. The electronic apparatus 100 may determine the second position P2 as a center point of the projection surface 10.

The electronic apparatus 100 may determine a projection mode. The projection mode may be at least one of an ultra-short throw mode and a regular mode. To operate in the ultra-short throw mode, the electronic apparatus 100 may use a lens corresponding to the ultra-short throw mode.

The electronic apparatus 100 may obtain a projection position in the ultra-short throw mode in which the minimum screen size may be output. The minimum position in the ultra-short throw mode may be described as a third position P3. The minimum position may represent a minimum position that should be away from the projection surface 10. Since the minimum screen size should be output, the electronic apparatus 100 may not be positioned closer to the projection surface 10 than the minimum position.

The electronic apparatus 100 may obtain the maximum position in the ultra-short throw mode in which the maximum screen size may be output. The maximum position in the ultra-short throw mode may be described as a fourth position P4. The maximum position may represent a maximum position that should be away from the projection surface 10. Since the maximum screen size may not be output, the electronic apparatus 100 may be positioned closer to the projection surface 10 than the maximum position.

The electronic apparatus 100 may obtain a minimum position in the regular mode in which the minimum screen size may be output. The minimum position in the regular mode may be described as a fifth position P5. The minimum position may represent the minimum position that should be away from the projection surface 10. Since the minimum screen size should be output, the electronic apparatus 100 may not be positioned closer to the projection surface 10 than the minimum position.

The electronic apparatus 100 may obtain the maximum position in the regular mode in which the maximum screen size may be output. The maximum position in the regular mode may be described as a sixth position P6. The maximum position may represent the maximum position that should be away from the projection surface 10. Since the maximum screen size may not be output, the electronic apparatus 100 may be positioned closer to the projection surface 10 than the maximum position.

When operating in the ultra-short throw mode, the electronic apparatus 100 may acquire (or determine) the first projection position T1 for performing a projection function in the ultra-short throw mode. The electronic apparatus 100 may determine a first projection position T1 between the third position P3 and the fourth position P**4**.

Referring to embodiment 320 of FIG. 3, the electronic apparatus 100 may identify a central vertical line 11 of the projection surface 10. The central vertical line 11 of the projection surface 10 may contact a floor surface 20. A central vertical line 11 of the projection surface 10 may cross the center of the projection surface 10. The electronic apparatus 100 may identify the floor surface 20 contacting the projection surface 10. The electronic apparatus 100 may determine a position at which the vertical line 11 contacts the floor surface 20 as the second position P2. The second position P2 may be a representative position of the projection surface 10.

The electronic apparatus 100 may identify a central vertical line 12 of the floor surface 20. The central vertical line 12 of the floor surface 20 may contact the projection surface 10. The central vertical line 12 of the floor surface 20 may cross the center of the floor surface 20. The electronic apparatus 100 may determine the third position P3, the fourth position P4, the fifth position P5, the sixth position P6, etc., from a central vertical line 13 of the floor surface 20. According to various embodiments, the electronic apparatus 100 may determine a seventh position P7, an eighth position P8, a ninth position P9, a tenth position P10, an eleventh position P11, etc., from the central vertical line 13 of the floor surface 20.

According to an embodiment, the electronic apparatus 100 may use the central vertical line 11 of the projection surface 10, the central vertical line 12 of the floor surface 20, and the horizontal line 13 of the projection surface 10 when using three-dimensional space coordinates. The central vertical line 11 of the projection surface 10 may correspond to the z-axis. The central vertical line 12 of the floor surface 20 may correspond to the x-axis. The horizontal line 13 of the projection surface 10 may correspond to the y-axis.

According to an embodiment, the electronic apparatus 100 may utilize the central vertical line 12 of the floor surface 20 and the horizontal line 13 of the projection surface 10 when utilizing the two-dimensional spatial coordinates. The central vertical line 12 of the floor surface 20 may correspond to the x-axis. The horizontal line 13 of the projection surface 10 may correspond to the y-axis.

The electronic apparatus 100 may determine the second position P2 as the origin (or reference point) of the spatial coordinates. The electronic apparatus 100 may determine the positions P3 to P6 based on the central vertical line 12 of the floor surface 20 where the value corresponding to the y-axis and/or the value corresponding to the z-axis is 0.

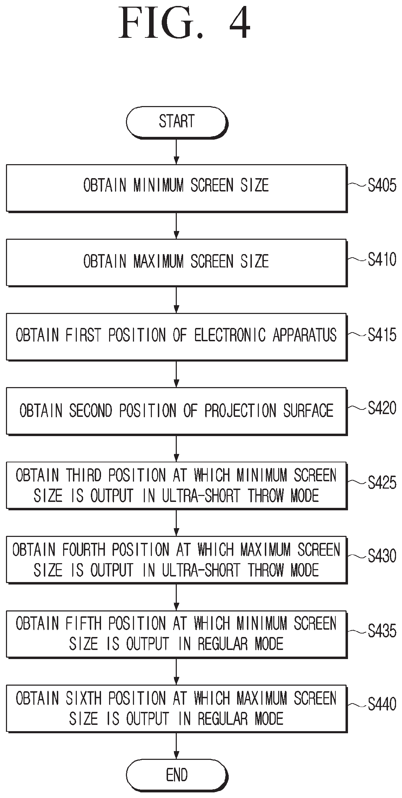

FIG. 4 is a diagram for describing an operation of obtaining various positions used to determine a projection position according to an embodiment.

Referring to FIG. 4, the electronic apparatus 100 may obtain the minimum screen size when performing the projection function (S405). The minimum screen size may be described as the minimum size of the projection image or the minimum size of the area to which the projection image will be output.

The electronic apparatus 100 may obtain the minimum size of the screen on which the projection image will be projected. The electronic apparatus 100 may determine the minimum screen size based on category information of the projection image. A preset minimum size may be determined in advance in response to the category information.

The electronic apparatus 100 may obtain category information of content to be output according to a user command. The electronic apparatus 100 may obtain a minimum screen size corresponding to the category information of the content.

The electronic apparatus 100 may obtain a maximum screen size when performing the projection function (S410). The maximum screen size may be described as the maximum size of the projection image or the maximum size of the area to which the projection image will be output.

The electronic apparatus 100 may obtain the maximum size of the screen on which the projection image will be projected. The electronic apparatus 100 may obtain the maximum screen size based on the size of the projection surface 10. As the size of the projection surface 10 increases, the maximum screen size also increases.

The electronic apparatus 100 may obtain the first position P1 indicating the current position of the electronic apparatus 100 (S415).

The electronic apparatus 100 may obtain the second position P2 indicating the position of the projection surface 10 (S420).

The electronic apparatus 100 may obtain the third position P3 that may output the projection image at the minimum screen size in the ultra-short throw mode (S425).

The electronic apparatus 100 may obtain the fourth position P4 that may output the projection image at the maximum screen size in the ultra-short throw mode (S430).

The electronic apparatus 100 may obtain the fifth position P5 where the projection image may be output at the minimum screen size in the regular mode (S435).

The electronic apparatus 100 may obtain the sixth position P6 where the projection image may be output at the maximum screen size in the regular mode (S440).

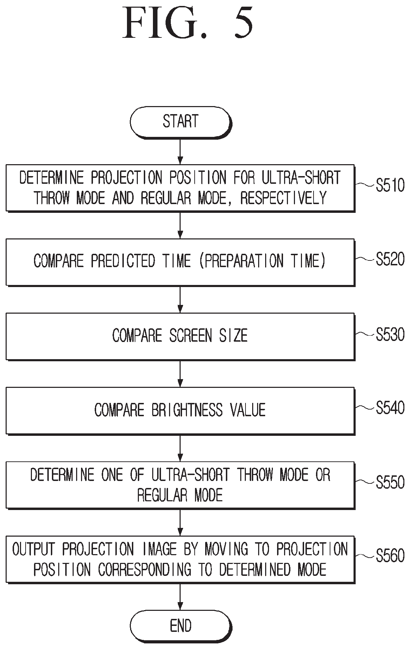

FIG. 5 is a diagram for describing an operation of determining an ultra-short throw mode or a regular mode according to an embodiment.

Referring to FIG. 5, the electronic apparatus 100 may determine projection positions for the ultra-short throw mode and the regular mode, respectively (S510). The electronic apparatus 100 may determine the position at which the projection image is projected in the ultra-short throw mode as the first projection position. The electronic apparatus 100 may determine the position at which the projection image is projected in the regular mode as the second projection position.

The electronic apparatus 100 may perform a comparison operation to determine whether to project the projection image in the ultra-short throw mode or the regular mode. The comparison operation may include at least one of a predicted time comparison operation, a screen size comparison operation, and a brightness value comparison operation. The comparison operation may include an operation of comparing a value corresponding to the ultra-short throw mode with a value corresponding to the regular mode.

The electronic apparatus 100 may compare the predicted time (S520). The predicted time may be described as a preparation time.

The electronic apparatus 100 may compare the screen size (S530). The screen size may represent the size of the area to which the projection image is output among the entire area of the projection surface 10.

The electronic apparatus 100 may compare the brightness values (S540).

Based on the result of the comparison operation, the electronic apparatus 100 may determine any one of the ultra-short throw mode or the regular mode (S550).

The electronic apparatus 100 may move to the projection position corresponding to the determined mode and output the projection image (S560). When the ultra-short throw mode is determined, the electronic apparatus 100 may move to the first projection position and output the projection image. When the regular mode is determined, the electronic apparatus 100 may move to the second projection position and output the projection image.

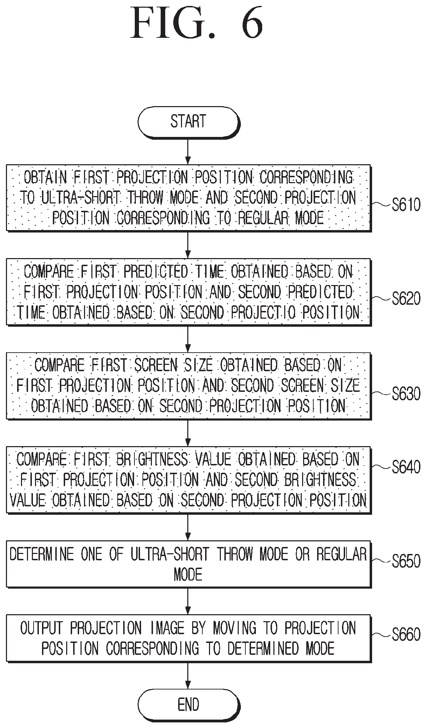

FIG. 6 is a diagram for describing an operation of determining a projection method, according to an embodiment.

Steps S610, S620, S630, S640, S650, and S660 of FIG. 6 may correspond to steps S510, S520, S530, S540, S550, and S560 of FIG. 5. Duplicate descriptions will be omitted.

The electronic apparatus 100 may obtain (or calculate) the first projection position corresponding to the ultra-short throw mode and the second projection position corresponding to the regular mode (S610).

The electronic apparatus 100 may compare the first predicted time obtained based on the first projection position and the second predicted time obtained based on the second projection position (S620). The electronic apparatus 100 may obtain the first predicted time by considering the time it takes to move from the current position to the first projection position. The electronic apparatus 100 may obtain the second predicted time by considering the time it takes to move from the current position to the second projection position.

The electronic apparatus 100 may compare the first screen size obtained based on the first projection position and the second screen size obtained based on the second projection position (S630). When the electronic apparatus 100 outputs the projection image in the ultra-short throw mode at the first projection position, the electronic apparatus 100 may obtain the first screen size of the projection image to be output to the projection surface 10. When the electronic apparatus 100 outputs the projection image in the regular mode at the second projection position, the electronic apparatus 100 may obtain the second screen size of the projection image to be output to the projection surface 10.

The electronic apparatus 100 may compare the first brightness value obtained based on the first projection position and the second brightness value obtained based on the second projection position (S640). When the electronic apparatus 100 outputs the projection image in the ultra-short throw mode at the first projection position, the electronic apparatus 100 may obtain the first brightness value of the projection image to be output to the projection surface 10. When the electronic apparatus 100 outputs the projection image in the regular mode at the second projection position, the electronic apparatus 100 may obtain the second brightness value of the projection image to be output to the projection surface 10. The brightness value may be expressed as an luminance value.

The first predicted time, the second predicted time, the first screen size, the second screen size, the first brightness value, the second brightness value, etc., may correspond to expected values predicted by the electronic apparatus 100.

FIG. 7 is a diagram illustrating a calculation method according to an area where the electronic apparatus 100 is positioned, according to an embodiment.

Referring to embodiment 700 of FIG. 7, the electronic apparatus 100 may identify a preset area. The preset area may be an area defined based on the central vertical line 12 of the floor surface 20 corresponding to the x-axis in the embodiment 320 of FIG. 3. The preset area may include at least one area.

The electronic apparatus 100 may determine whether the electronic apparatus 100 is included in the preset area using the value corresponding to the x-axis among coordinate information related to the current position of the electronic apparatus 100.

The electronic apparatus 100 may determine the area between the second position P2 and the third position P3 with respect to the central vertical line 12 as a first area r1. When the electronic apparatus 100 is positioned in the first area r1, the electronic apparatus 100 may determine the third position P3 as the first projection position and the fifth position P5 as the second projection position. When the electronic apparatus 100 is positioned in the first area r1, the electronic apparatus 100 may not perform the size comparison operation. Since the electronic apparatus 100 should move to the third position P3 or the fifth position P5 to output the projection image at the minimum screen size, the size comparison operation may be meaningless.

The electronic apparatus 100 may determine the area between the third position P3 and the fourth position P4 with respect to the central vertical line 12 as a second area r2. When the electronic apparatus 100 is positioned in the second area r2, the electronic apparatus 100 may determine the seventh position P7 corresponding to the current position based on the central vertical line 12 as the first projection position and the fifth position P5 as the second projection position.

The electronic apparatus 100 may determine the area between the fourth position P4 and the fifth position P5 based on the central vertical line 12 as the third area r3. When the electronic apparatus 100 is positioned in the third area r3, the electronic apparatus 100 may determine the fourth position P4 as the first projection position and the fifth position P5 as the second projection position.

The electronic apparatus 100 may determine the area between the fifth position P5 and the sixth position P6 based on the central vertical line 12 as the fourth area r4. When the electronic apparatus 100 is positioned in the fourth area r4, the electronic apparatus 100 may determine the fourth position P4 as the first projection position and determine the ninth position P9 corresponding to the current position based on the central vertical line 12 as the second projection position.

The electronic apparatus 100 may determine an area farther away from the projection surface 10 than the sixth position P6 based on the central vertical line 12 as the fifth area r5. When the electronic apparatus 100 is positioned in the fifth area r5, the electronic apparatus 100 may determine the fourth position P4 as the first projection position and determine the sixth position P6 as the second projection position. When the electronic apparatus 100 is positioned in the fifth area r5, the electronic apparatus 100 may not perform the size comparison operation. The size comparison operation may be meaningless because the electronic apparatus 100 must move to the fourth position P4 or the sixth position P6 so that the projection image is output smaller than the maximum screen size.

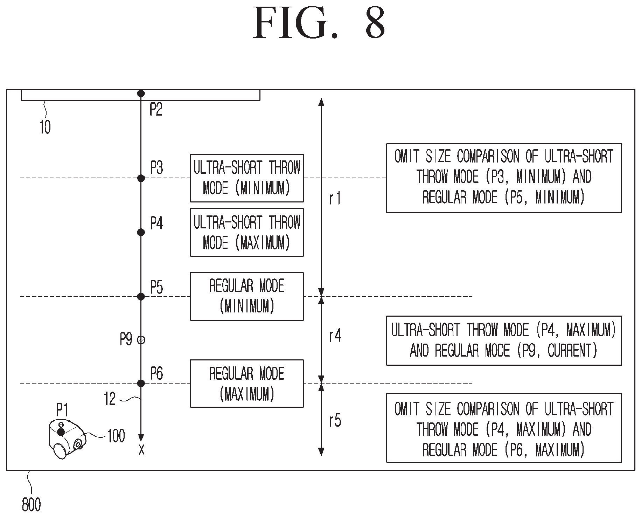

FIG. 8 is a diagram illustrating the preset area according to an embodiment.

Embodiment 800 of FIG. 8 illustrates that the preset area is divided into three. In ultra-short throw mode, the screen size may change more rapidly than in the regular mode depending on the projection position. The rapid change in the screen size may increase calculation errors. When dividing the preset area, the third position P3 and the fourth position P4 associated with the ultra-short throw mode may not be considered.

The electronic apparatus 100 may determine the area between the second position P2 and the fifth position P5 based on the central vertical line 12 as the first area r1. When the electronic apparatus 100 is positioned in the first area r1, the electronic apparatus 100 may determine the third position P3 as the first projection position and the fifth position P5 as the second projection position. When the electronic apparatus 100 is positioned in the first area r1, the electronic apparatus 100 may not perform the size comparison operation. Since the electronic apparatus 100 should move to the third position P3 or the fifth position P5 to output the projection image at the minimum screen size, the size comparison operation may be meaningless.

The electronic apparatus 100 may determine the area between the fifth position P5 and the sixth position P6 based on the central vertical line 12 as the fourth area r4. When the electronic apparatus 100 is positioned in the fourth area r4, the electronic apparatus 100 may determine the fourth position P4 as the first projection position and determine the ninth position P9 corresponding to the current position based on the central vertical line 12 as the second projection position.

The electronic apparatus 100 may determine an area farther away from the projection surface 10 than the sixth position P6 based on the central vertical line 12 as the fifth area r5. When the electronic apparatus 100 is positioned in the fifth area r5, the electronic apparatus 100 may determine the fourth position P4 as the first projection position and determine the sixth position P6 as the second projection position. When the electronic apparatus 100 is positioned in the fifth area r5, the electronic apparatus 100 may not perform the size comparison operation. The size comparison operation may be meaningless because the electronic apparatus 100 must move to the fourth position P4 or the sixth position P6 so that the projection image is output smaller than the maximum screen size.

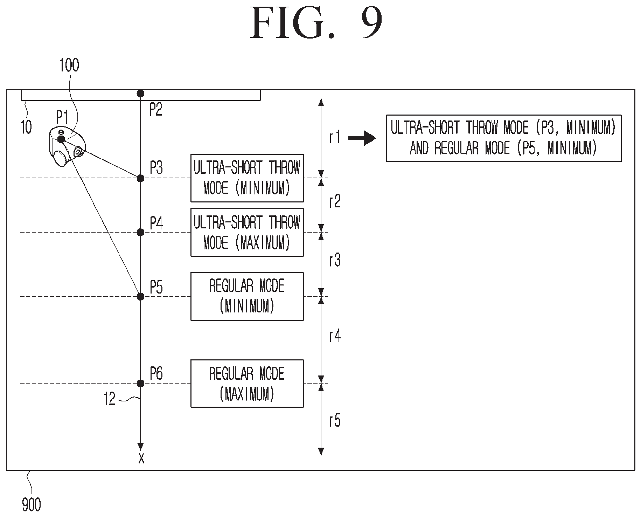

FIG. 9 is a diagram for describing a situation in which the electronic apparatus 100 is positioned in the first area r1, according to an embodiment.

Referring to embodiment 900 of FIG. 9, the electronic apparatus 100 may obtain the first position P1 indicating the current position of the electronic apparatus 100. The electronic apparatus 100 may determine whether the x-axis value of the first position P1 is included in the first area r1. When the electronic apparatus 100 is positioned in the first area r1, the electronic apparatus 100 may determine the third position P3 as the first projection position and the fifth position P5 as the second projection position.

The electronic apparatus 100 may perform the comparison operation based on the first projection position and the second projection position. As a result of the comparison operation, the electronic apparatus 100 may determine whether to output the projection image in the ultra-short throw mode or the regular mode.

FIG. 10 is a diagram for describing an operation of obtaining a predicted time when the electronic apparatus 100 is positioned in the first area r1, according to an embodiment.

Referring to FIG. 10, the electronic apparatus 100 may determine whether the electronic apparatus 100 is positioned in the first area r1 (S1005).

When the electronic apparatus 100 is positioned in the first area r1 (S1005-Y), the electronic apparatus 100 may determine the third position P3 as the first projection position for the ultra-short throw mode (S1011).

The electronic apparatus 100 may obtain the first predicted time of the ultra-short throw mode by summing the first movement time from the first position P1 to the first projection position (the third position P3) and switching time (S1012).

The electronic apparatus 100 may obtain a first predicted movement time from the first position P1 to the third position P3. The electronic apparatus 100 may also obtain a movement speed of the electronic apparatus 100. The electronic apparatus 100 may obtain the first movement time based on the movement distance and movement speed from the first position P1 to the third position P3.

The electronic apparatus 100 may obtain the first predicted time by summing the first movement time and the switching time.

The switching time may include at least one of a time tc1 for switching from the regular mode to the ultra-short throw mode or a time tc2 for switching from ultra-short throw mode to the regular mode.

When the electronic apparatus 100 is currently set to the regular mode, it is necessary to convert the state of the electronic apparatus 100 to the ultra-short throw mode to output the projection image in the ultra-short throw mode. The electronic apparatus 100 may obtain the time required to switch from the regular mode to the ultra-short throw mode. The switching time may include the fixed value tc1 as a pre-measured time. The electronic apparatus 100 may obtain the first predicted time by summing the first movement time and the preset time tc1.

When the electronic apparatus 100 is currently set to the ultra-short throw mode, there is no need to change the state of the electronic apparatus 100 to output the projection image in the ultra-short throw mode. The switching time may be 0 when calculating the first predicted time. The electronic apparatus 100 may obtain the first movement time as the first predicted time.

When the electronic apparatus 100 is positioned in the first area r1 (S1005-Y), the electronic apparatus 100 may determine the fifth position P5 as the second projection position in the regular mode (S1013).

The electronic apparatus 100 may obtain the second predicted time in the ultra-short throw mode by summing the second movement time from the first position P1 to the second projection position (the fifth position P5) and the switching time (S1014).

The electronic apparatus 100 may obtain the expected second movement time from the first position P1 to the fifth position P5. The electronic apparatus 100 may also obtain a movement speed of the electronic apparatus 100. The electronic apparatus 100 may obtain the second movement time based on the movement distance and the movement speed from the first position P1 to the fifth position P5.

The electronic apparatus 100 may obtain the second predicted time by summing the second movement time and the switching time.

When the electronic apparatus 100 is currently set to the regular mode, there is no need to convert the state of the electronic apparatus 100 to output the projection image in the regular mode. When calculating the second predicted time, the switching time may be 0. The electronic apparatus 100 may obtain the second movement time as the second predicted time.

When the electronic apparatus 100 is currently set to the ultra-short throw mode, the state of the electronic apparatus 100 needs to be converted into the regular mode to output the projection image in the regular mode. The electronic apparatus 100 may obtain the time required to switch from the ultra-short throw mode to the regular mode. The switching time may include the fixed value tc2 as the pre-measured time. The electronic apparatus 100 may obtain the second predicted time by summing the second movement time and the preset time tc2.

The electronic apparatus 100 may compare the first predicted time and the second predicted time (S1020). The operation of comparing the first predicted time and the second predicted time is described in FIG. 11.

FIG. 11 is a diagram for describing an operation of comparing the predicted time and the brightness value when the electronic apparatus 100 is positioned in the first area r1, according to an embodiment.

Referring to FIG. 11, the electronic apparatus 100 may compare the first predicted time and the second predicted time. The electronic apparatus 100 may determine whether the first predicted time is less than or equal to the second predicted time (S1121).

When the first predicted time is less than or equal to the second predicted time (S1121-Y), the electronic apparatus 100 may move to the first projection position (S1161). The electronic apparatus 100 may output the projection image based on the ultra-short throw mode at the first projection position (S1162).

When the first predicted time is not less than or equal to the second predicted time (S1121-N), the electronic apparatus 100 may perform the brightness comparison operation.

When the first predicted time is not less than or equal to the second predicted time (S1121-N), the electronic apparatus 100 may obtain the first brightness value corresponding to the ultra-short throw mode based on the first projection position (S1141).

The electronic apparatus 100 may obtain the second brightness value corresponding to the regular mode based on the second projection position (S1142).

The electronic apparatus 100 may obtain a brightness difference value between the first brightness value and the second brightness value (S1143).

The electronic apparatus 100 may determine whether the brightness difference value is greater than or equal to the threshold brightness value (S1144).

When the brightness difference value is greater than or equal to the threshold brightness value (S1144-Y), the electronic apparatus 100 may perform steps S1161 and S1162. The electronic apparatus 100 may output the projection image in the ultra-short throw mode at the first projection position.

When the brightness difference value is not greater than or equal to the threshold brightness value (S1144-N), the electronic apparatus 100 may move to the second projection position (S1163). The electronic apparatus 100 may output the projection image based on the regular mode at the second projection position (S1164).

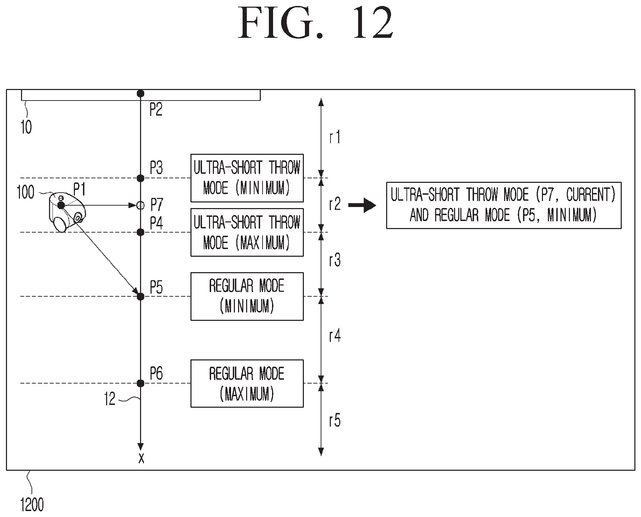

FIG. 12 is a diagram for describing a situation in which the electronic apparatus 100 is positioned in the second area r2, according to an embodiment.

Referring to embodiment 1200 of FIG. 12, the electronic apparatus 100 may obtain the first position P1 indicating the current position of the electronic apparatus 100. The electronic apparatus 100 may determine whether the x-axis value of the first position P1 is included in the second area r2. When the electronic apparatus 100 is positioned in the second area r2, the electronic apparatus 100 may obtain the seventh position P7.

The electronic apparatus 100 may obtain the seventh position P7 by converting the y-axis and z-axis values of the first position P1 into 0 and maintaining the x-axis value. For example, it is assumed that the coordinates of the first position P1 are (x1, y1, z1). The electronic apparatus 100 may determine (x1, 0, 0) as the seventh position P7. It is assumed that the coordinates of the first position P1 are (x1, y1). The electronic apparatus 100 may determine (x1, 0) as the seventh position P7.

The electronic apparatus 100 may obtain the seventh position P7 corresponding to the first position P1 along the x-axis, which represents the central vertical line 12 of the floor surface 20.

When the electronic apparatus 100 is positioned in the second area r2, the electronic apparatus 100 may determine the seventh position P7 as the first projection position and the fifth position P5 as the second projection position.

The electronic apparatus 100 may perform the comparison operation based on the first projection position and the second projection position. As a result of the comparison operation, the electronic apparatus 100 may determine whether to output the projection image in the ultra-short throw mode or the regular mode.

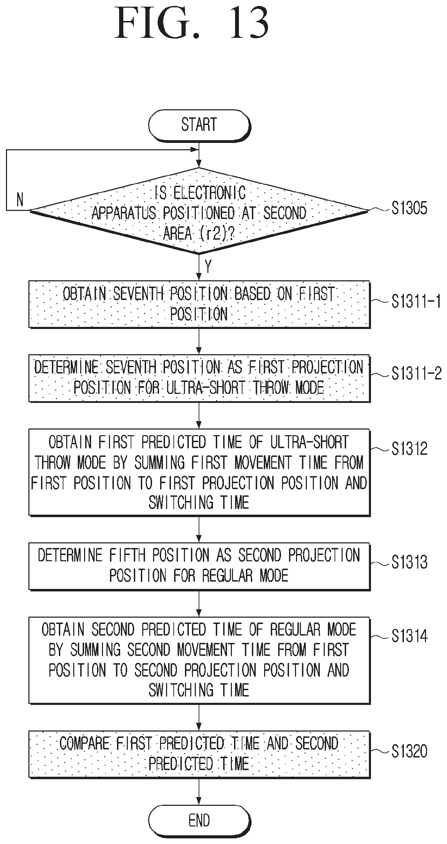

FIG. 13 is a diagram for describing an operation of obtaining the predicted time when the electronic apparatus 100 is positioned in the second area r2, according to an embodiment.

Steps S1312, S1313, S1314, and S1320 of FIG. 13 may correspond to steps S1012, S1013, S1014, and S1020 of FIG. 10. Duplicate descriptions will be omitted.

Referring to FIG. 13, the electronic apparatus 100 may determine whether the electronic apparatus 100 is positioned in the second area r2 (S1305).

When the electronic apparatus 100 is positioned in the second area r2 (S1305-Y), the electronic apparatus 100 may obtain the seventh position P7 based on the first position P1 (S1311-1).

The electronic apparatus 100 may determine the seventh position P7 as the first projection position for the ultra-short throw mode (S1311-2).

The electronic apparatus 100 may obtain the first predicted time of the ultra-short throw mode by summing the first movement time from the first position P1 to the first projection position (the seventh position P7) and the switching time (S1312).

The electronic apparatus 100 may perform steps S1313, S1314, and S1320.

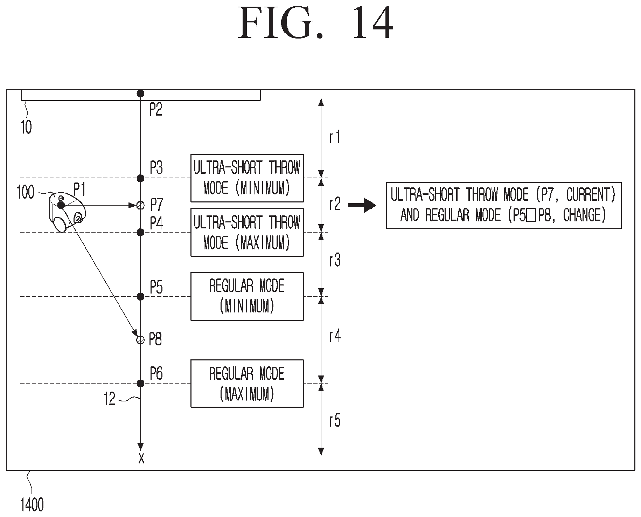

FIG. 14 is a diagram illustrating an operation of changing the second projection position when the electronic apparatus 100 is positioned in the second area r2, according to an embodiment.

Referring to embodiment 1400 of FIG. 14, the electronic apparatus 100 may change the second projection position from the fifth position P5 to the eighth position P8.

The electronic apparatus 100 may change the second projection position based on the result of the comparison operation. The electronic apparatus 100 may change the second projection position to a position farther away from the projection surface 1**0**.

The limit point for the change operation may be the sixth position P6. When the change is made to a position farther away from the projection surface 10 than the sixth position P6, the output size of the projection image becomes larger than the maximum size, so the second projection position may only be changed up to the sixth position P6. The change unit may be a preset unit. For example, the change unit may be 1 cm, **1**0 cm, etc.

The electronic apparatus 100 may compare the first screen size of the projection image to be output in the ultra-short throw mode at the first projection position with the second screen size of the projection image to be output in the regular mode at the second projection position. The electronic apparatus 100 may change the second projection position based on the comparison result.

FIG. 15 is a diagram for describing an operation of comparing screen sizes when the electronic apparatus 100 is positioned in the second area r2, according to an embodiment.

Referring to FIG. 15, the electronic apparatus 100 may compare the first predicted time and the second predicted time. The electronic apparatus 100 may determine whether the first predicted time is less than or equal to the second predicted time (S1521).

When the first predicted time is less than or equal to the second predicted time (S1521-Y), the electronic apparatus 100 may move to the first projection position (S1561). The electronic apparatus 100 may output the projection image based on the ultra-short throw mode at the first projection position (S1562).

When the first predicted time is not less than or equal to the second predicted time (S1521-N), the electronic apparatus 100 may obtain a first screen size on which the projection image may be projected in the ultra-short throw mode based on the first projection position (S1531). When outputting the projection image in the ultra-short throw mode at the first projection position, the electronic apparatus 100 may obtain the size of the projection image to be output to the projection surface 10 as the first screen size.

The electronic apparatus 100 may obtain the second screen size on which the projection image may be projected in the regular mode based on the second projection position (S1532). When outputting the projection image in the regular mode at the second projection position, the electronic apparatus 100 may obtain the size of the projection image to be output to the projection surface 10 as the second screen size.

The electronic apparatus 100 may obtain the size difference value between the first screen size and the second screen size (S1533). The electronic apparatus 100 may determine whether the size difference value is greater than or equal to a threshold size value (S1534).

When the size difference value is greater than or equal to the threshold size value (S1534-Y), the electronic apparatus 100 may change the second projection position (S1535). The electronic apparatus 100 may change the second projection position to be farther away from the projection surface 10. The electronic apparatus 100 may change the second projection position using the sixth position P6 as a limit point. The electronic apparatus 100 may change the second projection position to be farther away from the projection surface 10 by the preset unit.

According to various embodiments, when the second projection position is already identified as being at the threshold, the electronic apparatus 100 may no longer change the second projection position and move the first projection position to output the projection image to the projection surface 10 in the ultra-short throw mode (S1561, S1562).

When the second projection position changes, the electronic apparatus 100 may change the second predicted time based on the changed second projection position. The electronic apparatus 100 may re-obtain the second movement time from the first position P1 to the changed second projection position. The electronic apparatus 100 may sum the switching time to the re-obtained second movement time to change the second predicted time.

When the second predicted time changes, the electronic apparatus 100 may re-perform the operation of comparing the first predicted time and the second predicted time. The electronic apparatus 100 may re-perform operation S1521.

When the size difference value is not greater than the threshold size value (S1534-N), the electronic apparatus 100 may perform the brightness value comparison operation (S1540). A description related thereto is described with reference to FIG. 16.

FIG. 16 is a diagram for describing an operation of comparing the brightness values when the electronic apparatus 100 is positioned in a second area r2, according to an embodiment.

Referring to FIG. 16, the electronic apparatus 100 may obtain the first brightness value corresponding to the ultra-short throw mode based on the first projection position (S1641). When outputting the projection image in the ultra-short throw mode at the first projection position, the electronic apparatus 100 may obtain the first brightness value of the projection image to be output to the projection surface 10.

The electronic apparatus 100 may obtain the second brightness value corresponding to the regular mode based on the second projection position (S1642). When the electronic apparatus 100 outputs the projection image in the regular mode at the second projection position, the electronic apparatus 100 may obtain the second brightness value of the projection image to be output to the projection surface 10.

The electronic apparatus 100 may obtain a brightness difference value between the first brightness value and the second brightness value (S1643).

The electronic apparatus 100 may determine whether the brightness difference value is greater than or equal to the threshold brightness value (S1644).

When the brightness difference value is greater than or equal to the threshold brightness value (S1644-Y), the electronic apparatus 100 may move to the first projection position (S1661). The electronic apparatus 100 may output the projection image to the projection surface 10 based on the ultra-short throw mode at the first projection position (S1662).

When the brightness difference value is not greater than or equal to the threshold brightness value (S1644-N), the electronic apparatus 100 may move to the second projection position (S1663). The electronic apparatus 100 may output the projection image to the projection surface 10 based on the regular mode at the second projection position (S1664).

When the brightness difference value is greater than or equal to the threshold brightness value, the second projection position may be changed closer to the projection surface 10. However, when the electronic apparatus 100 is positioned in the second area r2, changing the second projection position closer to the projection surface 10 than the fifth position P5 may not satisfy the minimum screen size. Therefore, the electronic apparatus 100 may use the ultra-short throw mode without changing the second projection position.

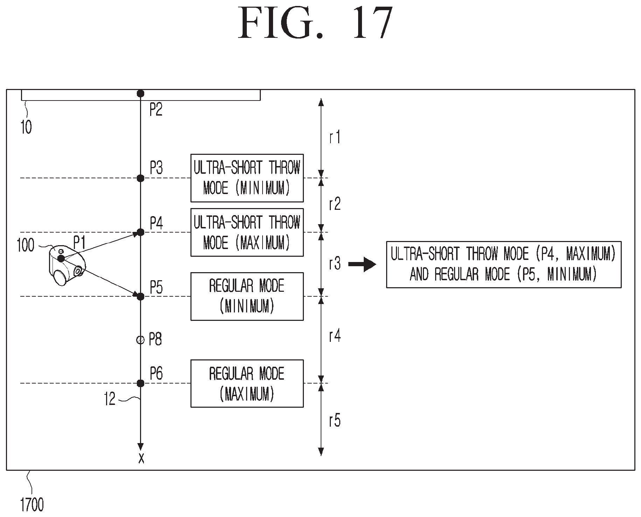

FIG. 17 is a diagram for describing a situation in which the electronic apparatus 100 is positioned in the third area r3, according to an embodiment.

Referring to embodiment 1700 of FIG. 17, the electronic apparatus 100 may obtain the first position P1 indicating the current position of the electronic apparatus 100. The electronic apparatus 100 may determine whether the x-axis value of the first position P1 is included in the third area r3. When the electronic apparatus 100 is positioned in the first area r1, the electronic apparatus 100 may determine the fourth position P4 as the first projection position and the fifth position P5 as the second projection position.

The electronic apparatus 100 may perform the comparison operation based on the first projection position and the second projection position. As a result of the comparison operation, the electronic apparatus 100 may determine whether to output the projection image in the ultra-short throw mode or the regular mode.

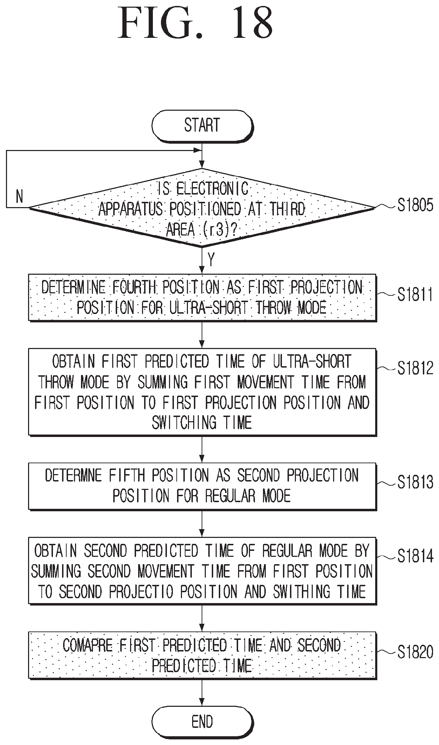

FIG. 18 is a diagram for describing an operation of obtaining a predicted time when the electronic apparatus 100 is positioned in the third area r3, according to an embodiment.

Steps S1811, S1812, S113, S1814, and S1820 of FIG. 18 may correspond to steps S1011, S1012, S113, S1014, and S1020 of FIG. 10.

The electronic apparatus 100 may determine whether the electronic apparatus 100 is positioned in the third area r3 (S1805).

When the electronic apparatus 100 is positioned in the third area r3 (S1805-Y), the electronic apparatus 100 may determine the fourth position P4 as the first projection position for the ultra-short throw mode (S1811). The electronic apparatus 100 may perform steps S1812, S1813, S1814, and S1820.

The electronic apparatus 100 may obtain the first predicted time and the second predicted time. The electronic apparatus 100 may compare the first predicted time and the second predicted time (S1820). The operation of comparing the predicted times is described in FIG. 15. The description described in FIG. 15 may also be applied to a case where the electronic apparatus 100 is positioned not only in the second area r2 but also in the third area r3.

The electronic apparatus 100 may perform the brightness value comparison operation in the embodiment of FIG. 15 (S1540). The operation of comparing the brightness values is described in FIG. 16. The description described in FIG. 16 may also be applied to a case where the electronic apparatus 100 is positioned not only in the second area r2 but also in the third area r3.

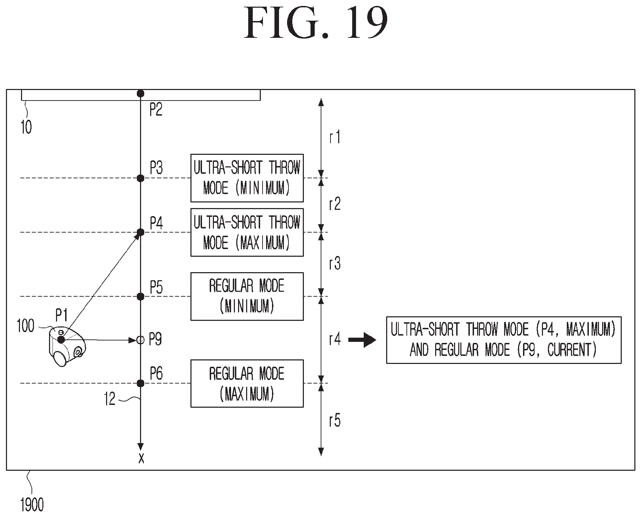

FIG. 19 is a diagram for describing a situation in which the electronic apparatus 100 is positioned in the fourth area r4, according to an embodiment.

FIG. 19 is a diagram for describing a situation in which the electronic apparatus 100 is positioned in the fourth area r4, according to an embodiment.

Referring to embodiment 1900 of FIG. 19, the electronic apparatus 100 may obtain the first position P1 indicating the current position of the electronic apparatus 100. The electronic apparatus 100 may determine whether the x-axis value of the first position P1 is included in the fourth area r4. When the electronic apparatus 100 is positioned in the fourth area r4, the electronic apparatus 100 may obtain the ninth position P9.

The electronic apparatus 100 may obtain the ninth position P9 by converting the y-axis and z-axis values into 0 at the first position P1 and maintaining the x-axis value. For example, it is assumed that the coordinates of the first position P1 are (x1, y1, z1). The electronic apparatus 100 may determine (x1, 0, 0) as the ninth position P9. It is assumed that the coordinates of the first position P1 are (x1, y1). The electronic apparatus 100 may determine (x1, 0) as the ninth position P9.

The electronic apparatus 100 may obtain the ninth position P7 corresponding to the first position P1 along the x-axis, which represents the central vertical line 12 of the floor surface 20.

When the electronic apparatus 100 is positioned in the fourth area r4, the electronic apparatus 100 may determine the fourth position P4 as the first projection position and the ninth position P9 as the second projection position.

The electronic apparatus 100 may perform the comparison operation based on the first projection position and the second projection position. As a result of the comparison operation, the electronic apparatus 100 may determine whether to output the projection image in the ultra-short throw mode or the regular mode.

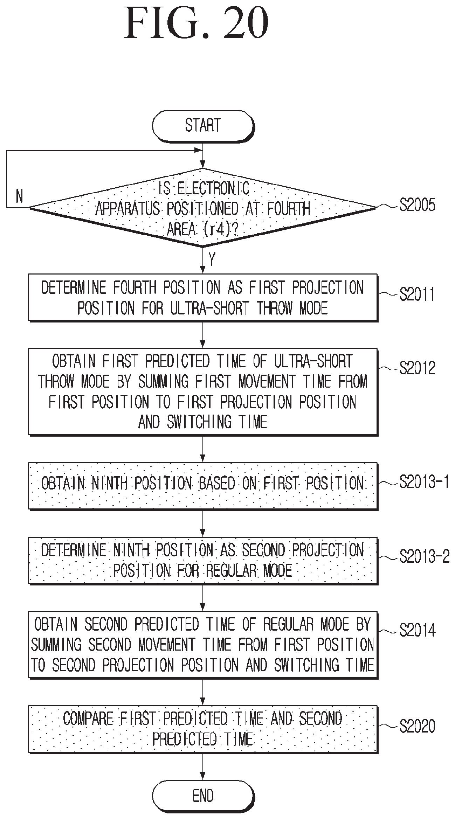

FIG. 20 is a diagram describing an operation of obtaining the predicted time when the electronic apparatus 100 is positioned in the fourth area r4, according to an embodiment.

Steps S2011, S2012, S2014, and S2020 of FIG. 20 may correspond to steps S1011, S1012, S1014, and S1020 of FIG. 10. Duplicate descriptions will be omitted.

The electronic apparatus 100 may determine whether the electronic apparatus 100 is positioned in the fourth area r4 (S2005).

When the electronic apparatus 100 is positioned in the fourth area r4 (S2005-Y), the electronic apparatus 100 may determine the fourth position P4 as the first projection position (S2011). The electronic apparatus 100 may obtain the first predicted time by considering the first projection position (S2012).

When the electronic apparatus 100 is positioned in the fourth area r4 (S2005-Y), the electronic apparatus 100 may obtain the ninth position P9 based on the first position P1 (S2013-1).

The electronic apparatus 100 may determine the ninth position P9 as the second projection position for the regular mode (S2013-2).

The electronic apparatus 100 may obtain the second predicted time by considering the second projection position (S2014).

The electronic apparatus 100 may obtain the first predicted time and the second predicted time. The electronic apparatus 100 may compare the first predicted time and the second predicted time (S2020). The operation of comparing the predicted times is described in FIG. 15. The description described in FIG. 15 may also be applied to a case where the electronic apparatus 100 is positioned not only in the second area r2 but also in the fourth area r4.

The electronic apparatus 100 may perform the brightness value comparison operation in the embodiment of FIG. 15 (S1540).

When the electronic apparatus 100 is positioned in the second area r2 or the third area r3, the brightness value comparison operation is described in FIG. 16.

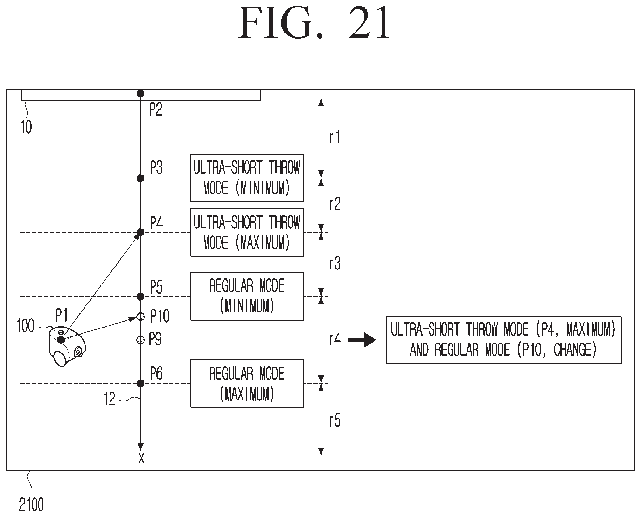

When the electronic apparatus 100 is positioned in the fourth area r4, the brightness value comparison operation is described in FIGS. 21 and 22.

FIG. 21 is a diagram for describing an operation of changing the second projection position when the electronic apparatus 100 is positioned in the fourth area r4, according to an embodiment.

Referring to embodiment 2100 of FIG. 21, the electronic apparatus 100 may change the second projection position from the ninth position P9 to the tenth position P10.

The electronic apparatus 100 may change the second projection position based on the result of the comparison operation. In FIG. 14, the operation of changing the second projection position included changing the position to a position farther away from the projection surface 10. In FIG. 21, the operation of changing the second projection position may include changing the position to a position closer to the projection surface 10.

The limit point for the change operation may be the fifth position P5. When the position is changed to a position closer to the projection surface 10 than the fifth position P5, the output size of the projection image becomes smaller than the minimum size, so the second projection position may only be changed up to the fifth position P5. The change unit may be a preset unit. For example, the change unit may be 1 cm, 10 cm, etc.

The electronic apparatus 100 may compare the first brightness value of the projection image to be output in the ultra-short throw mode at the first projection position with the second brightness value of the projection image to be output in the regular mode at the second projection position. The electronic apparatus 100 may change the second projection position based on the comparison result.

FIG. 22 is a diagram for describing an operation of comparing the brightness values when the electronic apparatus 100 is positioned in the fourth area r4, according to an embodiment.

Steps S2241, S2242, S2243, S2244, S2263, and S2264 of FIG. 22 may correspond to steps S1641, S1642, S1643, S1644, S1663, and S1664 of FIG. 16. Duplicate descriptions will be omitted.

FIG. 16 describes an operation of moving to the first projection position and outputting the projection image in the ultra-short throw mode when the brightness difference value is greater than or equal to the threshold brightness value.

When the brightness difference value is greater than or equal to the threshold brightness value (S2244-Y) in FIG. 21, the electronic apparatus 100 may change the second projection position (S2245). The electronic apparatus 100 may change the second projection position so that the second projection position is closer to the projection surface 10. The limit point may be the fifth position P5. The electronic device 100 may change the second projection position to become closer to the projection surface 10, but may not change the second projection position to be closer than the fifth position P5.

According to various embodiments, when the second projection position is already identified as being at the threshold, the electronic apparatus 100 may no longer change the second projection position and move the first projection position to output the projection image to the projection surface 10 in the ultra-short throw mode.

When the second projection position is changed, the electronic apparatus 100 may change the second screen size based on the changed second projection position (S2246). When the projection image is output at the changed second projection position, the electronic apparatus 100 may determine the screen size of the projection image to be output to the projection surface 10 as the second screen size.

The electronic apparatus 100 may compare the first screen size with the changed second screen size (S2247). The comparison operation between the first screen size and the changed second screen size may correspond to steps S1534, S1535, S1536, and S1540 of FIG. 15. Duplicate descriptions will be omitted. When the brightness value comparison operation described in FIG. 15 is re-performed, the embodiment of FIG. 21 may be applied again.

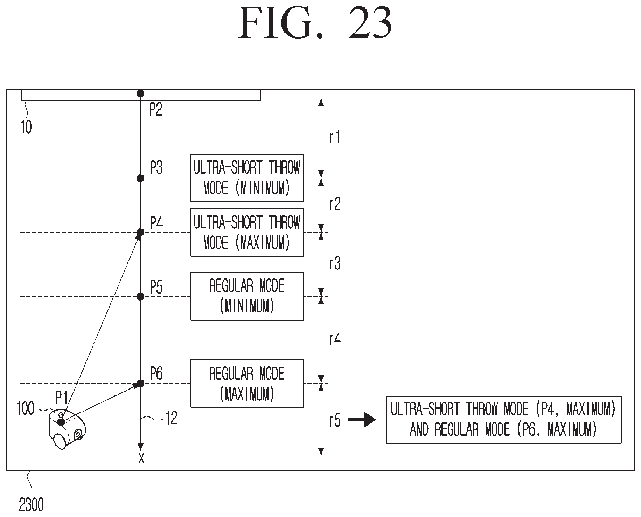

FIG. 23 is a diagram for describing a situation in which the electronic apparatus 100 is positioned in the fifth area r5, according to an embodiment.

Referring to embodiment 2300 of FIG. 23, the electronic apparatus 100 may obtain the first position P1 indicating the current position of the electronic apparatus 100. The electronic apparatus 100 may determine whether the x-axis value of the first position P1 is included in the fifth area r5. When the electronic apparatus 100 is positioned in the fifth area r5, the electronic apparatus 100 may determine the fourth position P4 as the first projection position and determine the sixth position P6 as the second projection position.

The electronic apparatus 100 may perform the comparison operation based on the first projection position and the second projection position. As a result of the comparison operation, the electronic apparatus 100 may determine whether to output the projection image in the ultra-short throw mode or the regular mode.

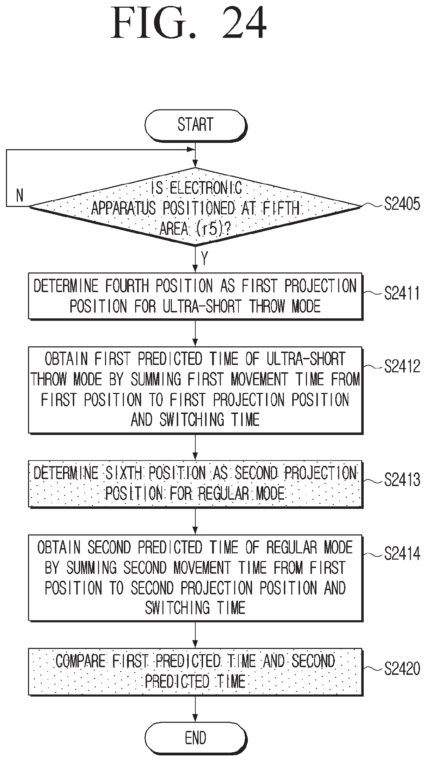

FIG. 24 is a diagram describing an operation of obtaining a predicted time when the electronic apparatus 100 is positioned in the fifth area r5, according to an embodiment.

Steps S2412, S2414, and S2420 of FIG. 24 may correspond to steps S1012, S1014, and S1020 of FIG. 10. Duplicate descriptions will be omitted.

The electronic apparatus 100 may determine whether the electronic apparatus 100 is positioned in the fifth area r5 (S2405).

When the electronic apparatus 100 is positioned in the fifth area r5 (S1005-Y), the electronic apparatus 100 may determine the fourth position P4 as the first projection position for the ultra-short throw mode (S2411). The electronic apparatus 100 may obtain the first predicted time by considering the first movement time from the current position to the first projection position and the switching time (S2412).

When the electronic apparatus 100 is positioned in the fifth area r5 (S1005-Y), the electronic apparatus 100 may determine the sixth position P6 as the second projection position in the regular mode (S2413). The electronic apparatus 100 may obtain the second predicted time by considering the second movement time from the current position to the second projection position and the switching time (S2414).

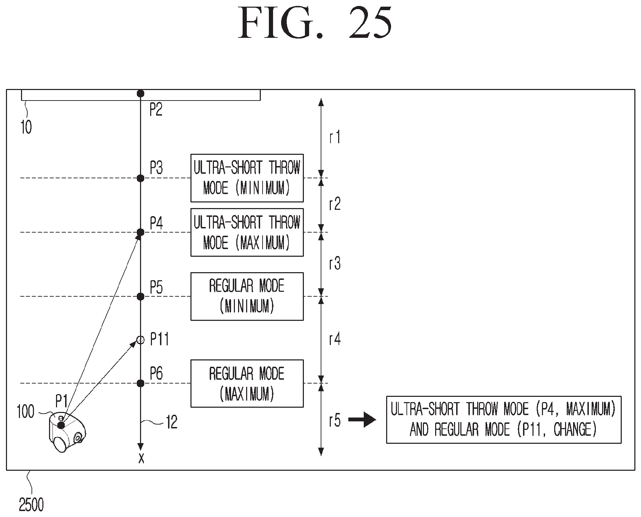

The electronic apparatus 100 may obtain the first predicted time and the second predicted time. The electronic apparatus 100 may compare the first predicted time and the second predicted time (S2420). The operation of comparing the first predicted time and the second predicted time is described in FIGS. 25 and 26.

FIG. 25 is a diagram for describing an operation of changing the second projection position when the electronic apparatus 100 is positioned in the fifth area r5, according to an embodiment.

Referring to embodiment 2500 of FIG. 25, the electronic apparatus 100 may change the second projection position from the sixth position P6 to the eleventh position P11.

The electronic apparatus 100 may change the second projection position based on the result of the comparison operation. In FIG. 14, the operation of changing the second projection position includes an operation of changing a position to a position farther away from the projection surface 10. In FIG. 25, the operation of changing the second projection position may include changing the position to a position closer to the projection surface 10.

The limit point for the change operation may be the fifth position P5. When the position is changed to a position closer to the projection surface 10 than the fifth position P5, the output size of the projection image becomes smaller than the minimum size, so the second projection position may only be changed up to the fifth position P5. The change unit may be a preset unit. For example, the change unit may be 1 cm, 10 cm, etc.

The electronic apparatus 100 may compare the first brightness value of the projection image to be output in the ultra-short throw mode at the first projection position with the second brightness value of the projection image to be output in the regular mode at the second projection position. The electronic apparatus 100 may change the second projection position based on the comparison result.

FIG. 26 is a diagram describing an operation of comparing the brightness values when the electronic apparatus 100 is positioned in the fifth area r5, according to an embodiment.

Steps S2621, S2641, S2642, S2643, S2644, S2661, S2662, S2663, and S2664 of FIG. 26 may correspond to steps S1121, S1141, S1142, S1143, S1144, S1161, S1162, S1163, and S1164 of FIG. 11. Duplicate descriptions will be omitted.

FIG. 11 describes an operation of moving to the first projection position and outputting the projection image in the ultra-short throw mode when the brightness difference value is greater than or equal to the threshold brightness value.

When the brightness difference value is greater than or equal to the threshold brightness value (S2644-Y) in FIG. 26, the electronic apparatus 100 may change the second projection position (S2645). The electronic apparatus 100 may change the second projection position so that the second projection position is closer to the projection surface 10. The limit point may be the fifth position P5. The electronic device 100 may change the second projection position to become closer to the projection surface 10, but may not change the second projection position to be closer than the fifth position P5.

According to various embodiments, when the second projection position is already identified as being at the limit point, the electronic apparatus 100 may no longer change the second projection position and move the first projection position to output the projection image to the projection surface 10 in the ultra-short throw mode.

When the second projection position is changed, the electronic apparatus 100 may change the second screen size based on the changed second projection position (S2646). When the projection image is output at the changed second projection position, the electronic apparatus 100 may determine the screen size of the projection image to be output to the projection surface 10 as the second screen size.

The electronic apparatus 100 may compare the first screen size with the changed second screen size (S2647). The comparison operation between the first screen size and the changed second screen size may correspond to steps S1534, S1535, S1536, and S1540 of FIG. 15. Duplicate descriptions will be omitted. When the brightness value comparison operation described in FIG. 15 is re-performed, the embodiment of FIG. 26 may be applied again.

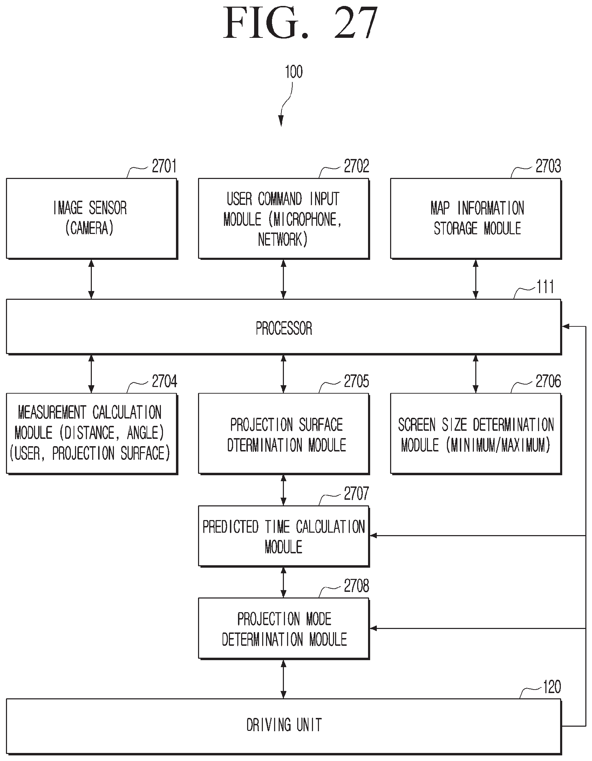

FIG. 27 is a diagram for describing multiple modules included in the electronic apparatus 100, according to an embodiment.

Referring to FIG. 27, the electronic apparatus 100 may include at least one of an image sensor 2701, a user command input module 2702, a map information storage module 2703, a measurement calculation module 2704, a projection surface determination module 2705, a screen size determination module 2706, a predicted time calculation module 2707, a projection mode determination module 2708, a processor 111, and a driving unit 120.

The processor 111 may be connected to at least one of the image sensor 2701, the user command input module 2702, the map information storage module 2703, the measurement calculation module 2704, the projection surface determination module 2705, the screen size determination module 2706, the predicted time calculation module 2707, the projection mode determination module 2708, and the driving unit 120.

The image sensor 2701 may be included in the sensor unit 121. The image sensor 2701 may include a sensor that obtains a captured image. The image sensor 2701 may include various types of cameras. The electronic apparatus 100 may obtain the captured image through the image sensor 2701.

The user command input module 2702 may be a module that obtains and stores a user command. The user command input module 2702 may obtain audio data including a user voice command through a microphone. The user command input module 2702 may obtain control data (or text data) including a user command through a network.

The map information storage module 2703 may include map information related to the space in which the electronic apparatus 100 is positioned. The map information may be described as at least one of spatial information, two-dimensional spatial information, and three-dimensional spatial information. The electronic apparatus 100 may use the map information to determine a driving route or driving method of the electronic apparatus 100.

The measurement calculation module 2704 may be a module that calculates physical characteristics. The electronic apparatus 100 may use the measurement calculation module 2704 to calculate characteristic information such as position, distance, and angle. The position may include the position of the electronic apparatus 100, the user's position, the projection surface 10, the first projection position corresponding to the ultra-short throw mode, the projection position corresponding to the second projection position, and other positions (the first position P1 to the eleventh position P**11**).

The projection surface determination module 2705 may be a module that determines the projection surface 10 for outputting the projection image. The projection surface determination module 2705 may determine at least one projection surface. When multiple projection surfaces exist, the projection surface determination module 2705 may determine candidate projection surfaces and determine one final projection surface based on the analysis results.

The screen size determination module 2706 may determine (or predict) the size of the projection image to be output to the projection surface. The screen size determination module 2706 may determine the screen size on which the projection image is output to the projection surface 10 based on the preset projection ratio according to the projection mode (or projection lens), the projection distance to the projection surface 10, etc.

The predicted time calculation module 2707 may calculate the time required to move from the current position to the projection position. The predicted time calculation module 2707 may calculate the movement time by considering the preset movement speed of the electronic apparatus 100, the current position, the projection position (or target position), etc.

The projection mode determination module 2708 may be a module that determines one of multiple projection modes that the electronic apparatus 100 may provide. The projection mode determination module 2708 may determine one of the multiple projection modes by performing the comparison operation.

Once the projection mode is determined, the electronic apparatus 100 may control the operation of the electronic apparatus 100 through the driving unit 120. For example, the electronic apparatus 100 may move the electronic apparatus 100 to the projection position through the driving unit 120.

The electronic apparatus 100 may control each component (sensor, module, driving unit, etc.) disclosed in FIG. 27 using the processor 111.

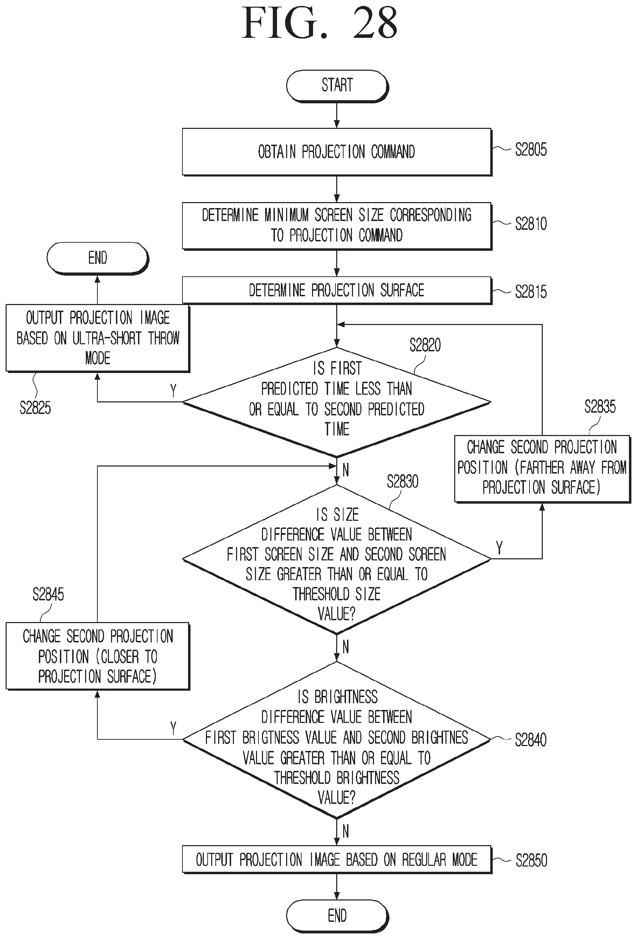

FIG. 28 is a diagram for describing an operation of changing the second projection position, according to an embodiment.

Referring to FIG. 28, the electronic apparatus 100 may obtain the projection command (S2805). The electronic apparatus 100 may determine the minimum screen size corresponding to the projection command (S2810). The electronic apparatus 100 may determine the projection surface based on the minimum screen size (S2815).

The electronic apparatus 100 may calculate the first predicted time corresponding to the ultra-short throw mode and the second predicted time corresponding to the regular mode based on the projection surface.

The electronic apparatus 100 may determine the first projection position at which to output the projection image in the ultra-short throw mode from the current position. The electronic apparatus 100 may calculate the first predicted time by considering the first movement time from the current position to the first projection position and the switching time.

The electronic apparatus 100 may determine the second projection position at which to output the projection image in the regular mode from the current position. The electronic apparatus 100 may calculate the second predicted time by considering the second movement time required from the current position to the second projection position and the switching time.

The electronic apparatus 100 may determine whether the first predicted time is less than or equal to the second predicted time (S2820). When the first predicted time is less than or equal to the second predicted time (S2820-Y), the electronic apparatus 100 may output the projection image based on the ultra-short throw mode (S2825). The electronic apparatus 100 may move to the first projection position and output the projection image to the projection surface 10 in the ultra-short throw mode at the first projection position.

When the first predicted time is not less than or equal to the second predicted time (S2820-N), the electronic apparatus 100 may perform the screen size comparison operation.

When the electronic apparatus 100 outputs the projection image in the ultra-short throw mode at the first projection position, the electronic apparatus 100 may obtain the first screen size to be output to the projection surface 10 and when the projection image is output in the regular mode at the second projection position, obtain the second screen size to be output to the projection surface 10.

The electronic apparatus 100 may obtain the size difference value between the first screen size and the second screen size. The electronic apparatus 100 may determine whether the size difference value is greater than or equal to a threshold size value (S2830).

When the size difference value is greater than or equal to the threshold size value (S2830-Y), the electronic apparatus 100 may change the second projection position to be away from the projection surface 10 (S2835). The electronic apparatus 100 may repeat step S2820.

When the size difference value is not greater than or equal to the threshold size value (S2830-N), the electronic apparatus 100 may perform the brightness value comparison operation.

When the electronic apparatus 100 outputs the projection image in the ultra-short throw mode at the first projection position, the electronic apparatus 100 may obtain the first brightness value to be output to the projection surface 10, and when the electronic apparatus 100 outputs the projection image in the regular mode at the second projection position, the electronic apparatus 100 may obtain the second brightness value to be output to the projection surface 10.

The electronic apparatus 100 may obtain the brightness difference value between the first brightness value and the second brightness value. The electronic apparatus 100 may determine whether the brightness difference value is greater than or equal to the threshold brightness value (S2840).

When the brightness difference value is greater than or equal to the threshold brightness value (S2840-Y), the electronic apparatus 100 may change the second projection position to be closer to the projection surface 10 (S2845). The electronic apparatus 100 may repeat step S2830.

When the brightness difference value is not greater than or equal to the threshold brightness value (S2840-N), the electronic apparatus 100 may output the projection image based on the regular mode (S2850).

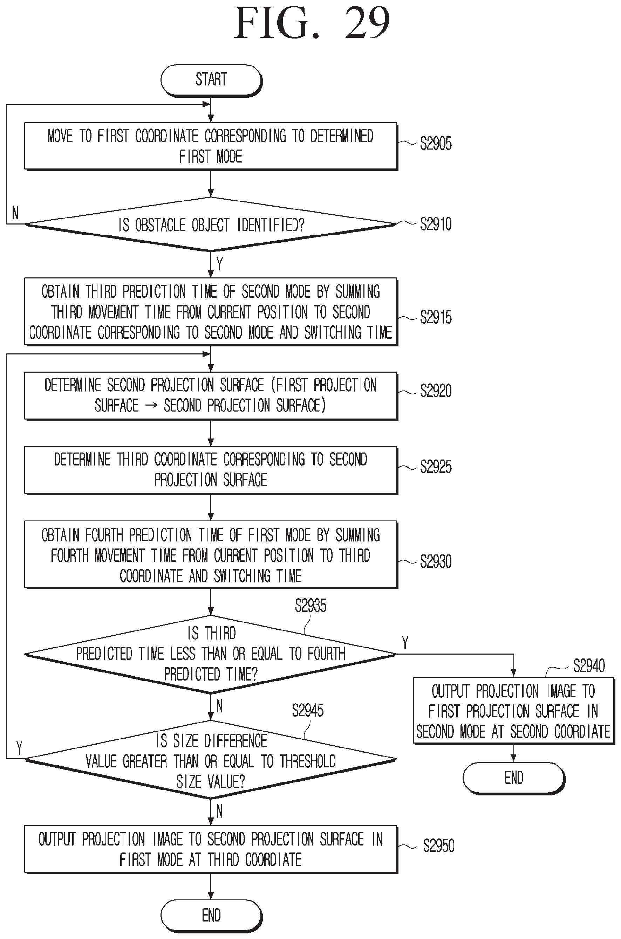

FIG. 29 is a diagram for describing an operation of identifying an obstacle object, according to an embodiment.

Referring to FIG. 29, the electronic apparatus 100 may determine one of the multiple projection modes. The multiple projection modes may include at least one of the ultra-short throw mode or the regular mode. The determined mode is described as the first mode. The projection position corresponding to the determined mode is described as a first coordinate. A mode other than the determined mode is described as the second mode. The scan position of the method other than the determined mode is described as a second coordinate. The coordinates may be described as a position or position information.

The electronic apparatus 100 may move to the first coordinate corresponding to the determined first mode (S2905). The electronic apparatus 100 may determine whether an obstacle object is identified during or after movement (S2910). The obstacle object may represent an obstacle that is determined to make it difficult to output the projection image to the projection surface 10. When then obstacle object is identified, it may be determined that it is difficult to output the projection image using the determined first mode.

The electronic apparatus 100 may determine whether to output the projection image at the second coordinate using a mode other than the existing mode (the second mode) or to output the projection image to another projection surface while maintaining the existing mode (the first mode). The information related to the second mode (the second coordinate) may be information already obtained during the initial projection mode determination step.

When the obstacle object is identified (S2910-Y), the electronic apparatus 100 may determine whether to change the projection position. The electronic apparatus 100 may obtain the third predicted time of the second mode by summing up the third movement time from the current position to the second coordinate corresponding to the second mode (a mode other than the determined mode) and the switching time (S2915).

The electronic apparatus 100 may determine the second projection surface (S2920). For example, the electronic apparatus 100 may determine the second projection surface other than the previously determined first projection surface. When a new second projection surface is determined, the projection position may be determined based on the position of the second projection surface. The second projection surface may be a candidate projection surface.

The electronic apparatus 100 may determine a third coordinate corresponding to the position of the second projection surface (S2925). The fourth predicted time of the first mode may be obtained by summing up the fourth movement time from the current position to the third coordinate and the switching time (S2930).

The electronic apparatus 100 may determine whether the third predicted time is less than or equal to the fourth predicted time (S2935). When the third predicted time is less than or equal to the fourth predicted time (S2935-Y), the electronic apparatus 100 may output the projection image to the first projection surface (the existing projection surface) using the second mode at the second coordinate (S2940).

When the third predicted time is not less than or equal to the fourth predicted time (S2935-N), the electronic apparatus 100 may perform the size comparison operation.

When the electronic apparatus 100 outputs the projection image using the second mode at the second coordinate, the electronic apparatus 100 may obtain the third screen size of the projection image to be output to the projection surface 10. When the electronic apparatus 100 outputs the projection image using the first mode at the third coordinate, the electronic apparatus 100 may obtain the fourth screen size of the projection image to be output to the projection surface 10. The electronic apparatus 100 may obtain the size difference between the third screen size and the fourth screen size.

The electronic apparatus 100 may determine whether the size difference value is greater than or equal to a threshold size value (S2945). When the size difference value is greater than or equal to the threshold size value (S2945-Y), the electronic apparatus 100 may repeat steps S2920, S2925, S2930, S29365, S2940, and S2945.

When the size difference value is not greater than or equal to the threshold size value (S2945-N), the electronic apparatus 100 may output the projection image to the second projection surface using the first mode at the third coordinate (S2950).

When the projection image may not be output to the first projection surface using the first mode due to an obstacle object, the electronic apparatus 100 may select whether to output the projection image to the first projection surface using the second mode or to output the projection image to the second projection surface using the first mode.

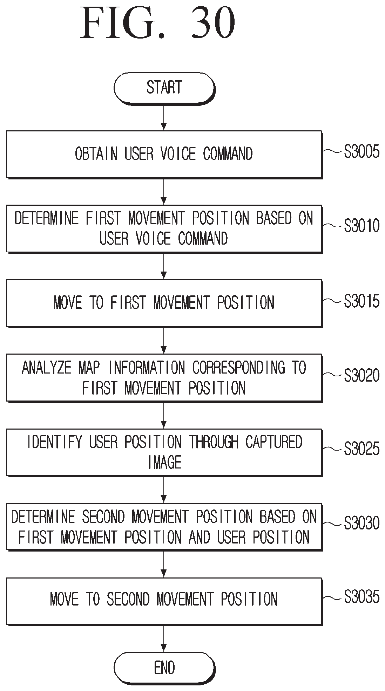

FIG. 30 is a diagram for describing an operation of changing a movement position, according to an embodiment.

Referring to FIG. 30, the electronic apparatus 100 may obtain a user voice command (S3005). The electronic apparatus 100 may predict the position at which the user voice command is uttered. The electronic apparatus 100 may move to the predicted position.

The electronic apparatus 100 may determine (or predict) the first movement position based on the user voice command (S3010). The electronic apparatus 100 may move to the first movement position (S3015).

The electronic apparatus 100 may analyze (or obtain) map information corresponding to the first movement position (S3020). The electronic apparatus 100 may obtain feature information related to the first movement position based on the map information. The feature information may include information related to the projection surface that is likely to output the projection image.

After the electronic apparatus 100 moves to the first movement position, the electronic apparatus 100 may obtain the captured image using the image sensor. The electronic apparatus 100 may identify the user's position through the captured image (S3025). The electronic apparatus 100 may determine the second movement position based on the first movement position and the user's position (S3030). The first movement position may have an error with the position at which the user actually utters a voice command. The electronic apparatus 100 may determine the user's position using the image sensor to ensure accuracy.

The electronic apparatus 100 may determine the second movement position by comprehensively considering the first movement position and the user's position. The electronic apparatus 100 may move to the second movement position (S3035).

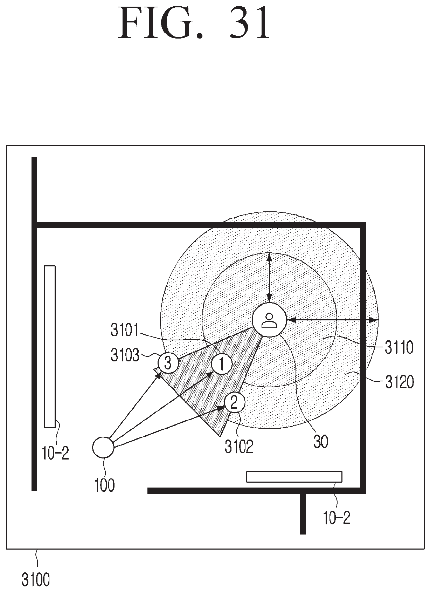

FIG. 31 is a diagram for describing an operation of determining the projection position by considering a user's activity radius, according to an embodiment.

According to an embodiment 3100 of FIG. 31, the electronic apparatus 100 may identify a position 3101 corresponding to the user 30. The electronic apparatus 100 may move to the position 3101 corresponding to the user 30. The electronic apparatus 100 may determine the projection surface based on the position 3101 corresponding to the user 30. The position 3101 corresponding to the user 30 may include a position that is a threshold distance away from the position of the user 30.

The electronic apparatus 100 may identify a first radius area 3110 based on the position 3101 corresponding to the user 30. The first radius area 3110 may include an area corresponding to a preset radius based on the position 3101 corresponding to the user 30. The electronic apparatus 100 may determine the projection surface using the first radius area 3110.

When the projection surface is not identified based on the first radius area 3110, the electronic apparatus 100 may identify a second radius area 3120 having a radius greater than the preset radius of the first radius area 3110. The electronic apparatus 100 may determine the projection surface based on the second radius area 3120 having a radius greater than the first radius area 3110.

For example, the electronic apparatus 100 may identify candidate projection surfaces 10-2 and 10-3 based on the second radius area 3120. The electronic apparatus 100 may determine one of the candidate projection surfaces 10-2 and 10-3 as the final projection surface.

When the final projection surface is determined to be projection surface 10-2, the electronic apparatus 100 may identify a projection position 3102 corresponding to the projection surface 10-2. The electronic apparatus 100 may move to the projection position 3102 and output the projection image to the projection surface 10-2.

When the final projection surface is determined to be projection surface 10-3, the electronic apparatus 100 may identify a projection position 3103 corresponding to the projection surface 10-3. The electronic apparatus 100 may move to the projection position 3103 and output the projection image to the projection surface 10-3.

The electronic apparatus 100 may determine, among the plurality of candidate projection surfaces, the projection surface on which the projection image may be output more quickly as the final projection surface.

According to various embodiments, the electronic apparatus 100 may determine whether there is the projection surface for outputting the projection image in the ultra-short throw mode based on the position 3101 corresponding to the user 30. When there is no projection surface for outputting the projection image in the ultra-short throw mode, the electronic apparatus 100 may identify the projection surface for outputting the projection image in the regular mode. When there is no projection surface for outputting the projection image in the ultra-short throw mode, the electronic apparatus 100 may move to a position 3101 corresponding to the user 30 and then identify the candidate projection surface.

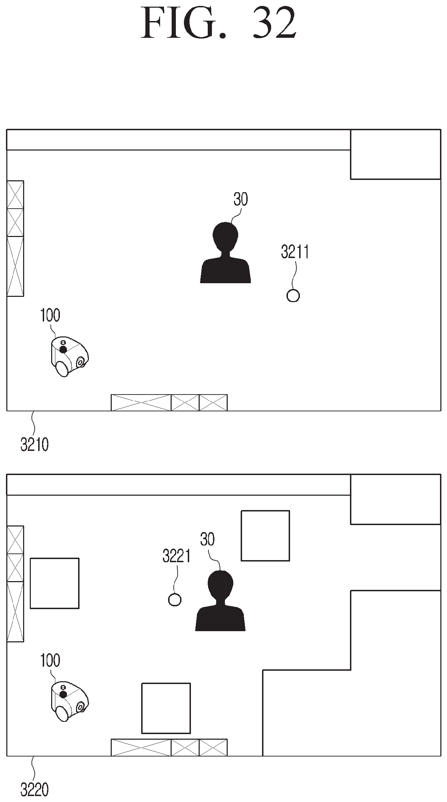

FIG. 32 is a diagram for describing an operation of determining a movement position in consideration of a projection environment, according to an embodiment.

Embodiment 3210 of FIG. 32 illustrates a situation in which the projection surface is determined in a space with many projectable surfaces on a wall and no obstacles.

The electronic apparatus 100 determines a position 3211 having a large number of candidate projection surfaces for outputting a projection image by considering the positions of the candidate projection surfaces, and moves to the determined position 3211. The electronic apparatus 100 may then determine the projection surface after moving to the determined position 3211.

Embodiment 3220 of FIG. 32 illustrates a situation in which the projection surface is determined in a space with a small number of projectable surfaces on the wall and many obstacles.

When the number of candidate projection surfaces is less than a threshold, the electronic apparatus 100 may determine the center position 3221 of the space and move to the determined position 3221. The electronic apparatus 100 may then determine the projection surface after moving to the determined position 3221.

The candidate projection surface may represent the projection surface on which the projection image may be output while avoiding obstacles.

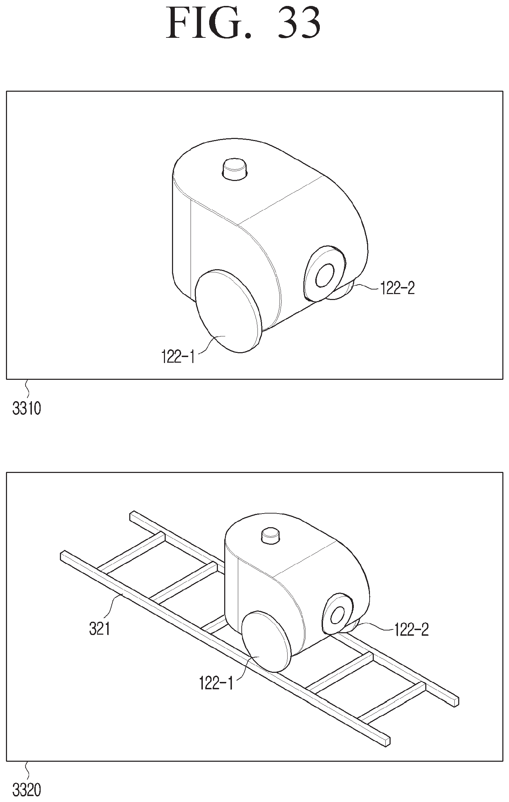

FIG. 33 is a diagram illustrating a mobile projector according to an embodiment.

The electronic apparatus 100 may be implemented as a mobile device. The electronic apparatus 100 may be implemented as a mobile projector or a mobile image output device.

The electronic apparatus 100 may include the moving member 122. The moving member 122 may refer to a member for moving from the first position to the second position in the space where the electronic apparatus 100 is arranged. The moving member 122 may include at least one wheel (e.g., a circular wheel). The electronic apparatus 100 may move to the target position (designated position) via the moving member.

Referring to embodiment 3310 of FIG. 33, the electronic apparatus 100 may move by a user's pushing force. When the user pushes the electronic apparatus 100, the moving member 122 of the electronic apparatus 100 may rotate. The moving member 122 may include a wheel, and the electronic apparatus 100 may move by the moving member 122 that rotates due to an external force.

Referring to embodiment 3320 of FIG. 33, the moving member 122 may move via a fixed member 3321. The fixed member 3321 may include a movable rail. The electronic apparatus 100 may be placed on the movable rail. The electronic apparatus 100 may move on the movable rail. The electronic apparatus 100 does not include the movable rail as a component thereof; the movable rail may be a component installed by the user.

The electronic apparatus 100 may control the moving member 122 to move the electronic apparatus 100 using the force generated by the driving unit 120. The electronic apparatus 100 may generate force to be transmitted to the moving member 122 using the motor included in the driving unit 120.

When the user input or control command is received, the electronic apparatus 100 may rotate the moving member 122 by transmitting the force generated through the motor to the moving member 122. The electronic apparatus 100 may control the moving member 122 to adjust the rotation speed, the rotation direction, etc. The electronic apparatus 100 may perform the movement operation (or movement function) by controlling the moving member 122 based on the target position, the direction of travel, etc.

The electronic apparatus 100 may travel based on at least one of a preset movement speed or a preset acceleration. The preset movement speed or acceleration may be changed according to user settings.

According to various embodiments, the electronic apparatus 100 may control the speed or acceleration based on the preset event. The electronic apparatus 100 may identify whether the preset event has occurred. To identify whether the preset event has occurred, the electronic apparatus 100 may obtain at least one of travel data (or map data) or sensing data.

When the electronic apparatus 100 identifies the preset event as occurring, the electronic apparatus 100 may travel by changing the speed or acceleration. The preset event may include at least one of an event for traveling to the target position or an event for identifying the preset object.

The event for traveling to the target position may include at least one of an event for starting traveling at the current position or an event for stopping traveling at the target position. When the control command (or user input) for traveling from the current position to the target position is obtained, the electronic apparatus 100 may increase at least one of the speed or acceleration. When it is determined that the electronic apparatus 100 has reached the threshold distance from the target position, the electronic apparatus 100 may decrease at least one of the speed or acceleration.

The preset object may include an obstacle object. When an obstacle object is identified, the electronic apparatus 100 may decrease the acceleration. The acceleration may increase in the opposite direction to the direction of travel. When the acceleration decreases, the speed increase amount of the electronic apparatus 100 decreases, and when the acceleration is in the opposite direction to the direction of travel, the speed may decrease.

According to various embodiments, the electronic apparatus 100 may move over the fixed member 3321 by the force transmitted through the driving unit 120. The electronic apparatus 100 may automatically move the fixed member 3321 using the force generated by the driving unit 120 rather than an external force. The automatic movement operation may be described as a sliding type.

According to various embodiments, the electronic apparatus 100 may move to the identified target position based on the user input. The target position may include a target position to which the electronic apparatus 100 is to move. The user may input a command to the electronic apparatus 100 to move to the target position. The electronic apparatus 100 may receive the user input for moving to the target position.

For example, the user input may include information about the position to which the electronic apparatus 100 is to move. The electronic apparatus 100 may determine the position information included in the user input as the target position and move to the target position.

For example, the user input may include the information about the position of the projection surface 10 on which the electronic apparatus 100 outputs the projection image. The electronic apparatus 100 may determine the target position at which the electronic apparatus 100 will output the projection image based on the position information of the projection surface 10 included in the user input. The electronic apparatus 100 may move to the determined target position.

The user input including the target position may be received (or obtained) through the external device connected to the electronic apparatus 100.

For example, the external device may include a remote control device capable of communicating with the electronic apparatus 100.

For example, the external device may include a user terminal device capable of communicating with the electronic apparatus 100.

The electronic apparatus 100 may identify the target position through the sensor unit 121. The sensor unit 121 may obtain sensing data about the surroundings of the electronic apparatus 100. The electronic apparatus 100 may identify the target position based on the sensing data.

For example, the electronic apparatus 100 may identify, from sensing data, a laser beam emitted by a user to point to a target position. When the user points the laser beam at the target position with a laser, etc., the electronic apparatus 100 may sense the position of the laser beam to identify the target position.

For example, the electronic apparatus 100 may identify, from the sensing data, a user gesture indicating a target position. When the user points the target position with a finger (or an object representing a pointing direction), the electronic apparatus 100 may sense the user's gesture to identify the target position.

The electronic apparatus 100 may include the projection unit 112. The electronic apparatus 100 may control the projection unit 112 to output the projection image.

According to various embodiments, the electronic apparatus 100 may include the projection unit 112 utilizing ultra-short throw (UST) method. The ultra-short throw mode may refer to a mode of projecting an image at a relatively close distance (e.g., 1 m or less). Despite the close distance, a clear projection image may be output to the projection surface 10.

According to various embodiments, the electronic apparatus 100 may include the projection unit 112 using the regular mode. The projection unit 112 may include various types of light sources. For example, the projection unit 112 may include at least one light source of a lamp, an LED, and a laser. The regular mode may include a mode of outputting the projection image at a distance exceeding 1 m.

According to various embodiments, the electronic apparatus 100 may output the projection image using both the ultra-short throw mode and the regular mode at the same projection position. The electronic apparatus 100 may output the projection image using both the ultra-short throw mode and the regular mode at the same time.

The electronic apparatus 100 may segment a first area and a second area from the entire projection area for projecting the projection image. The electronic apparatus 100 may output the projection image to the first area using the ultra-short throw mode and to the second area using the regular mode.

For example, the projection image output to the first area and the projection image output to the second area may be sub-images generated based on the same projection image (source image).

For example, the projection image output to the first area and the projection image output to the second area may be different projection images.

For example, the electronic apparatus 100 may output the projection image to the first area using the ultra-short throw mode and to the second area using the regular mode by using the same light source.

For example, the electronic apparatus 100 may output the projection image to the first area using the ultra-short throw mode and to the second area using the regular mode by using different light sources. The electronic apparatus 100 may output the projection image to the first area using the ultra-short throw mode through a first light source output from a first light source unit, and may output the projection image to the second area using the regular mode through a second light source output from a second light source unit.

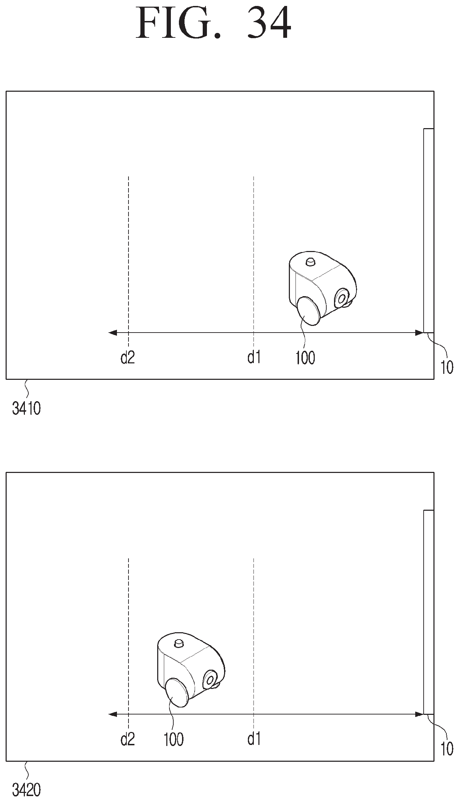

FIG. 34 is a diagram for describing the distance between the projection surface 10 and the electronic apparatus 100 according to an embodiment.

Referring to FIG. 34, the electronic apparatus 100 may determine a projection mode based on the distance between the electronic apparatus 100 and the projection surface 10.

The projection mode may include at least one of the ultra-short throw (UST) or the regular mode. The ultra-short throw mode may be described as the first mode, and the regular mode may be described as the second mode. The electronic apparatus 100 may obtain (or calculate) the distance between the position of the electronic apparatus 100 and the position of the projection surface 10 and determine the projection mode based on the obtained distance.

When the distance between the electronic apparatus 100 and the projection surface 10 is less than or equal to the threshold distance, the electronic apparatus 100 may output the projection image using the ultra-short throw mode. When the distance between the electronic apparatus 100 and the projection surface 10 exceeds the threshold distance, the electronic apparatus 100 may output the projection image using the regular mode.

Referring to embodiment 3410, a situation is described where the distance between the electronic apparatus 100 and the projection surface 10 is less than or equal to a threshold distance d1. The electronic apparatus 100 may output the projection image using the ultra-short throw mode.

Referring to embodiment 3420, a situation is described where the distance between the electronic apparatus 100 and the projection surface 10 exceeds the threshold distance d1. The electronic apparatus 100 may output the projection image using the regular mode.

The threshold distance d1 may be described as a first threshold distance. When the distance between the electronic apparatus 100 and the projection surface 10 exceeds a second threshold distance d2, the electronic apparatus 100 may control the distance between the electronic apparatus 100 and the projection surface 10 to be within the second threshold distance d2. The electronic apparatus 100 may determine the target position at which the distance between the electronic apparatus 100 and the projection surface 10 is within the second threshold distance d2 and move to the target position. After movement, the electronic apparatus 100 may output the projection image.

According to various embodiments, the electronic apparatus 100 may include a plurality of lenses.

The electronic apparatus 100 may include a first lens corresponding to the ultra-short throw (UST) method. The electronic apparatus 100 may include a second lens corresponding to the regular mode. The first and second lenses may have different refractive indices.

The electronic apparatus 100 may determine the projection mode using the projection environment (or ambient environment). The electronic apparatus 100 may determine a lens corresponding to the determined mode. The electronic apparatus 100 may output the projection image through the determined lens.

According to various embodiments, the electronic apparatus 100 may include an integrated lens (or first lens). Based on the integrated lens, the electronic apparatus 100 may output the projection image in the ultra-short throw (UST) method and the regular mode. The electronic apparatus 100 may implement various projection modes with a single lens.

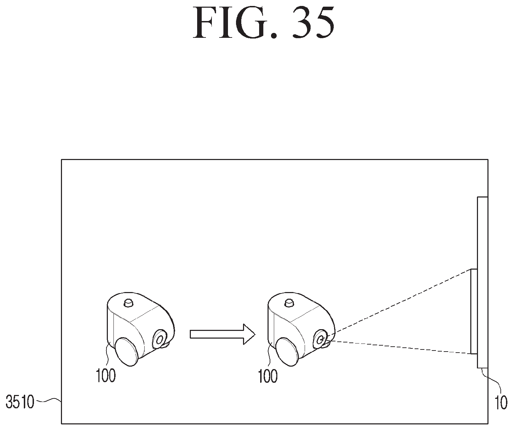

FIG. 35 is a diagram for describing a movement operation of an electronic apparatus 100, according to an embodiment.

Referring to embodiment 3510 of FIG. 35, the electronic apparatus 100 may move based on the projection position. The electronic apparatus 100 may obtain the projection position for moving the electronic apparatus 100.

According to various embodiments, the electronic apparatus 100 may move based on the projection position while not outputting the projection image. Once the projection position is identified (or obtained), the electronic apparatus 100 may determine whether the projection image is being output. When the projection image is not being output, the electronic apparatus 100 may move based on the projection position.

When the projection image is being output, the electronic apparatus 100 may stop projecting the projection image. After stopping outputting the projection image, the electronic apparatus 100 may move based on the projection position.

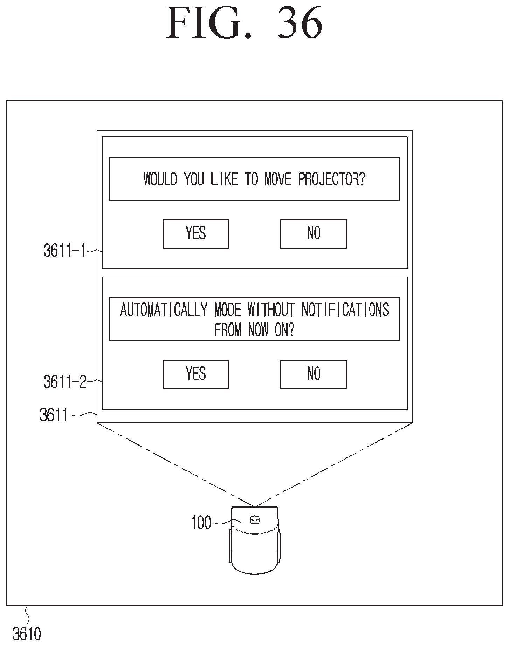

FIG. 36 is a diagram for describing a notification regarding position movement, according to an embodiment.

Referring to embodiment 3610 of FIG. 36, when a movement event is identified based on the projection position, the electronic apparatus 100 may output a movement notification screen 3611.

The movement notification screen 3611 may include at least one of a UI 3611-1 requesting a user input regarding the movement of the electronic apparatus 100 or a UI 3611-**2** for setting whether to display the movement notification screen.

When a user input including a movement command is received through the UI 3611-1, the electronic apparatus 100 may move based on the projection position.

When the user input is received through the UI 3611-2 to set the movement without the movement notification screen, the electronic apparatus 100 may no longer display the movement notification screen 3611. When the electronic apparatus 100 moves after receiving the user input, the electronic apparatus 100 may not display the movement notification screen 3611.

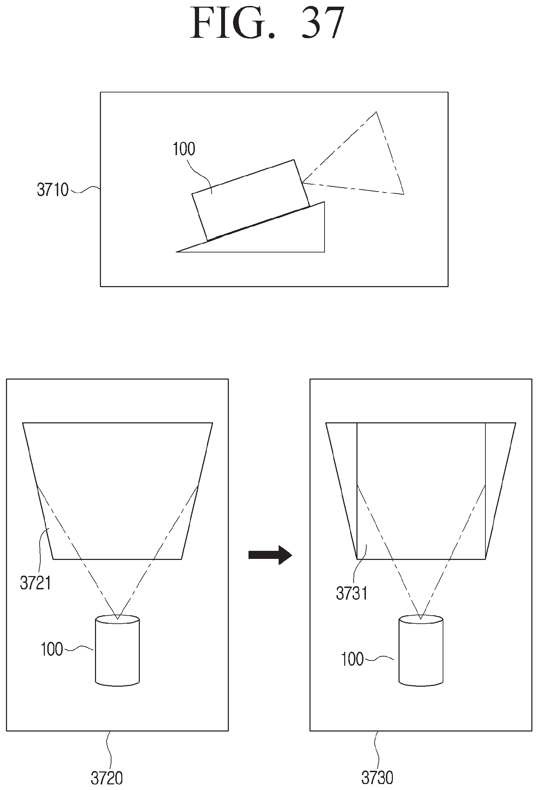

FIG. 37 is a diagram for describing the keystone correction function according to an embodiment.

Referring to embodiment 3710 of FIG. 37, when the tilt of the electronic apparatus 100 changes due to the positional movement, the electronic apparatus 100 may perform the keystone correction function. The keystone correction function may include an operation of correcting a trapezoidal image into a rectangular shape.

The electronic apparatus 100 may output the projection image while there is a vertical tilt.

Referring to embodiment 3720, the electronic apparatus 100 may output a projection image 3721 while there is a vertical tilt. Due to the vertical tilt, the projection image 3721 may be output in a trapezoidal shape rather than a rectangle that is an original image shape. To address issues occurring from the presence of the horizontal tilt, the electronic apparatus 100 may perform the keystone function.

Referring to embodiment 3730, the electronic apparatus 100 may perform a keystone function to modify the original image so that the finally output projection image 3731 becomes rectangular.

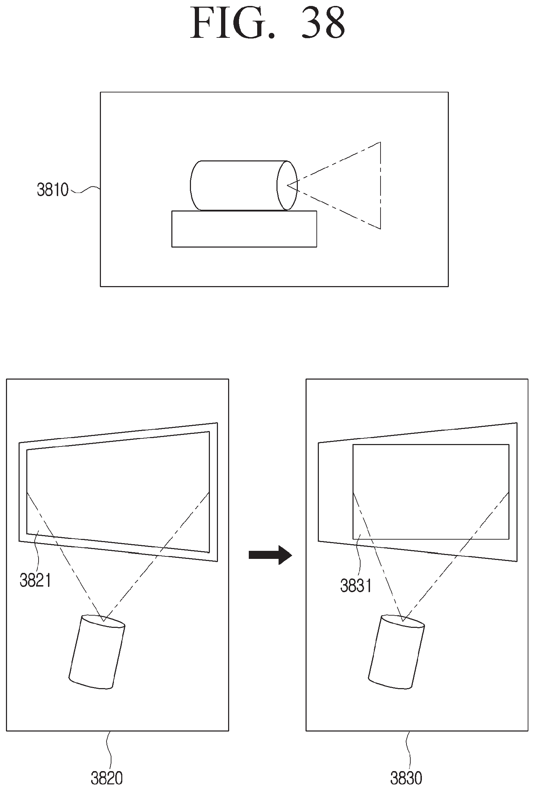

FIG. 38 is a diagram for describing the keystone correction function according to an embodiment.

Referring to embodiment 3810 of FIG. 38, when the tilt of the electronic apparatus 100 changes due to the positional movement, the electronic apparatus 100 may perform the keystone correction function.

The electronic apparatus 100 may output the projection image while there is a horizontal tilt.

Referring to embodiment 3820, the electronic apparatus 100 may output a projection image 3821 while there is the horizontal tilt. Due to the vertical tilt, the projection image 3821 may be output in a trapezoidal shape rather than a rectangle that is an original image shape due to the horizontal tilt. To address issues occurring from the presence of the horizontal tilt, the electronic apparatus 100 may perform the keystone function.

Referring to embodiment 3830, the electronic apparatus 100 may perform a keystone function to modify the original image so that the finally output projection image 3831 becomes rectangular.

According to various embodiments, the electronic apparatus 100 may perform the keystone correction at various points in time. It is assumed that the electronic apparatus 100 is positioned at the first position (current position). It is also assumed that the electronic apparatus 100 moves to the second position (projection position) and outputs the projection image.

For example, the electronic apparatus 100 may perform keystone correction at the first position. After completing the keystone correction at the first position, the electronic apparatus 100 may move to the second position. The electronic apparatus 100 may output the projection image with the keystone correction performed at the second position.

For example, the electronic apparatus 100 may perform keystone correction while moving from the first position to the second position. The electronic apparatus 100 may output the projection image with the keystone correction performed at the second position.

For example, the electronic apparatus 100 may perform keystone correction at the second position. The electronic apparatus 100 may output the projection image with the keystone correction performed at the second position.

According to various embodiments, the electronic apparatus 100 may output the projection image while moving. To output the projection image while moving, the electronic apparatus 100 may perform the keystone correction in real time while moving. The electronic apparatus 100 may perform the keystone correction based on each position while moving from the first position to the second position. The electronic apparatus 100 may output the projection image on which the keystone correction has performed in real time at each position while moving. The keystone correction may be increasingly performed at each position.

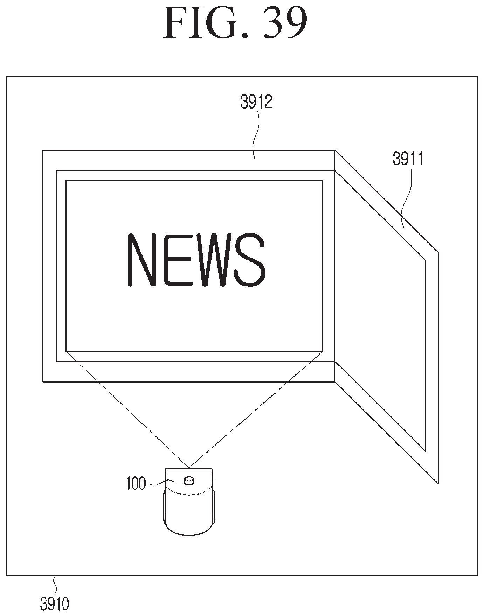

FIG. 39 is a diagram for describing an operation of changing a projection area, according to an embodiment.

Referring to embodiment 3910 of FIG. 39, when the size of the projection image changes, the electronic apparatus 100 may newly identify the projection surface corresponding to the changed size. The electronic apparatus 100 may determine the projection surface corresponding to the size of the projection image. It is assumed that there are multiple candidate projection surfaces in the space where the electronic apparatus 100 is arranged. The electronic apparatus 100 may output a projection image to a first projection surface 3911 among the multiple candidate projection surfaces. Changing the size of the projection image may include an operation of changing the resolution of the projection image or an operation of changing the aspect ratio of the projection image.

When the size of the projection image increases, the electronic apparatus 100 may determine whether the increased size of the projection image may be projected onto the first projection surface 3911. The electronic apparatus 100 may compare the size of the projection image with the size of the first projection surface 3911. When the size of the projection image is greater than that of the first projection surface 3911, the electronic apparatus 100 may determine to change the projection surface. The electronic apparatus 100 may select a second projection surface 3912 having a size greater than that of the projection image from among the multiple candidate projection surfaces. The electronic apparatus 100 may output the projection image to the second projection surface 3912.

According to various embodiments, the electronic apparatus 100 may determine whether to move based on attribute information of content including the projection image. The attribute information of the content may include at least one of information about the ratio of high-frequency components included in the content and information about whether to include an edge object.

When the ratio of the high-frequency components among the plurality of components included in the content is greater than or equal to a threshold ratio, the electronic apparatus 100 may move toward the projection surface 10.

When the content includes the edge object, the electronic apparatus 100 may move toward the projection surface 10.

When the electronic apparatus 100 moves toward the projection surface 10, the projection image may become clearer. The clarity of the projection image may indicate a relatively high quality of the projection image.

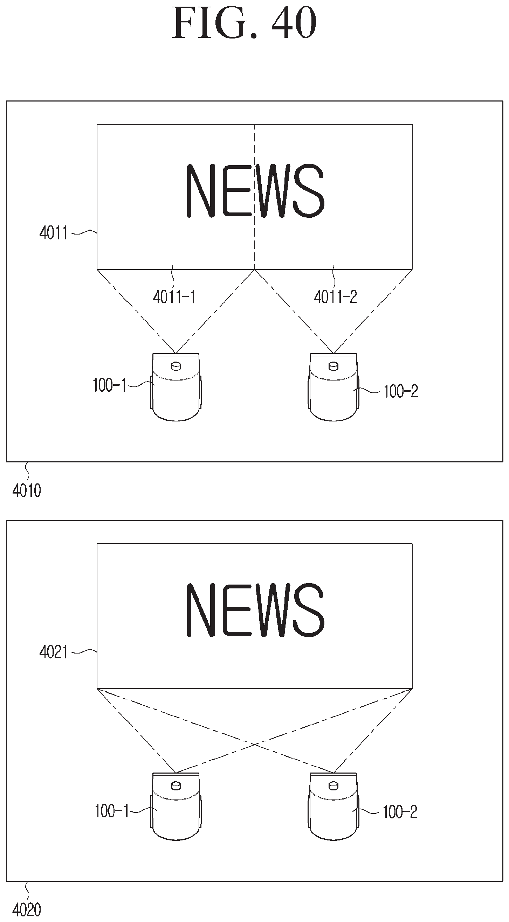

FIG. 40 is a diagram for describing an operation of outputting the projection image using a plurality of apparatuses, according to an embodiment.

Referring to embodiment 4010 of FIG. 40, according to various embodiments, a projection image 4011 may be output to the projection surface 10 by a plurality of electronic apparatuses including a projection unit. The plurality of electronic apparatuses may include a first electronic apparatus 100-1 and a second electronic apparatus 100-2.

The first electronic apparatus 100-1 may output a partial area 4011-1 of the projection image 4011 to the projection surface 10, and the second electronic apparatus 100-2 may output a partial area 4011-2 of the projection image to the projection surface 10. The electronic apparatus 100 may perform a synchronization operation to synchronize the portion projected by the first electronic apparatus 100-1 and the portion projected by the second electronic apparatus 100-2. The synchronization operation may include an operation of the plurality of electronic apparatuses to output images (or frames) at the same point in time.

The electronic apparatus 100 may perform an edge blending function when outputting the projection image to the plurality of electronic apparatuses. The edge blending function may include an operation in which a plurality of electronic apparatuses project respective images.

When the position of the electronic apparatus 100 changes, the electronic apparatus **1**00 may re-perform the edge blending function.

Referring to embodiment 4020 of FIG. 40, the plurality of electronic apparatuses may display the same projection image 4021 in an overlapping manner on the projection surface 10. When different electronic apparatuses 100 output the projection images 4021 in the same area, the brightness may increase. The plurality of electronic apparatuses may perform a synchronization operation to synchronize the projection images 4021.

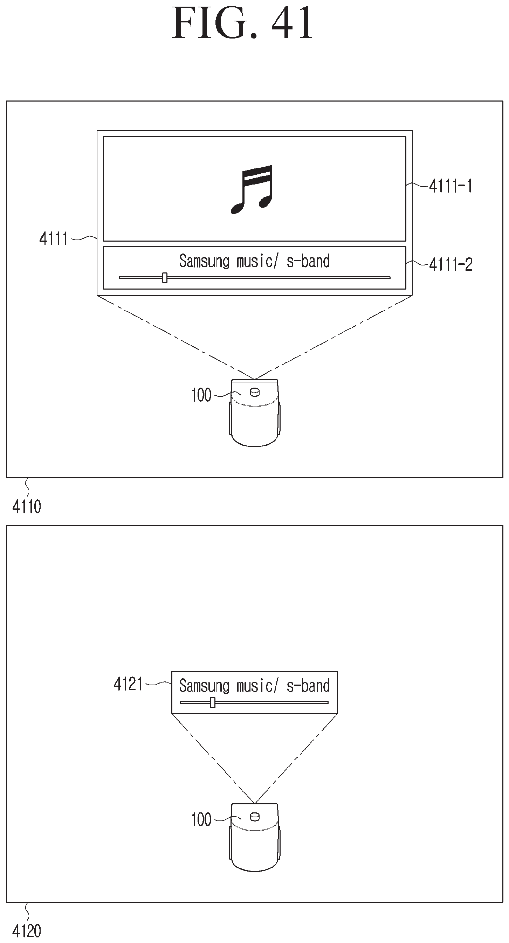

FIG. 41 is a diagram for describing an operation of changing the projection image based on a distance.

By reducing the projection area while moving toward the projection surface 10, the size of the projection image (content) may be reduced. By reducing the size of the projection image, it is possible to save power consumed in outputting the projection image.

Referring to embodiment 4110 of FIG. 41, the electronic apparatus 100 may output a projection image 4111 at the projection position positioned the first distance away from the projection surface. The projection image 4111 may include a first area 4111-1 and a second area 4111-2. The first area 4111-1 and the second area 4111-2 may include different contents. The electronic apparatus 100 may segment the multiple areas 4111-1 and 4111-2 using the edge lines in the projection image 4111.

The electronic apparatus 100 may identify an event for moving the projection position closer to the projection surface while reducing a size of the projection image. The electronic apparatus 100 may identify the target area 4111-2 among the multiple areas 4111-1 and 4111-2 based on the preset criteria. The target area according to the preset criteria may include at least one of a smaller area and an area selected as a main area by the user settings.

Referring to embodiment 4120 of FIG. 41, the electronic apparatus 100 may move closer to the projection surface, but may output only a projection image 4121 corresponding to the target area 4111-2 among the multiple areas 4111-1 and 4121-2. The electronic apparatus 100 may convert the size of the image corresponding to the target area 4111-2 and output a new projection image 4121.

For example, when the content is music-related content, the electronic apparatus 100 may move toward the projection surface 10. When moving toward the projection surface 10, the electronic apparatus 100 may reduce the battery consumption by reducing the size of the first projection image when outputting the content. The first projection image related to the music content may include a first area representing an image related to music and a second area representing music playback information. When the event for reducing the size of the first projection image is identified, the electronic apparatus 100 may generate the second projection image including only the second area and output the generated second projection image. The second projection image may be smaller in size than the first projection image with respect to the projection surface. The position at which the second projection image is output may be closer to the projection surface than the position at which the first projection image is output.

The electronic apparatus 100 may include a microphone 118. The electronic apparatus 100 may receive the user input through the microphone 118. The user input may include a voice input. The electronic apparatus 100 may perform a function corresponding to the user input based on the user input including the user voice.

The function corresponding to the user input may include a full-screen output (full view) function. The full-screen output function may be described in a full-screen output state. The electronic apparatus 100 may receive a voice command and perform a function corresponding to the voice command.

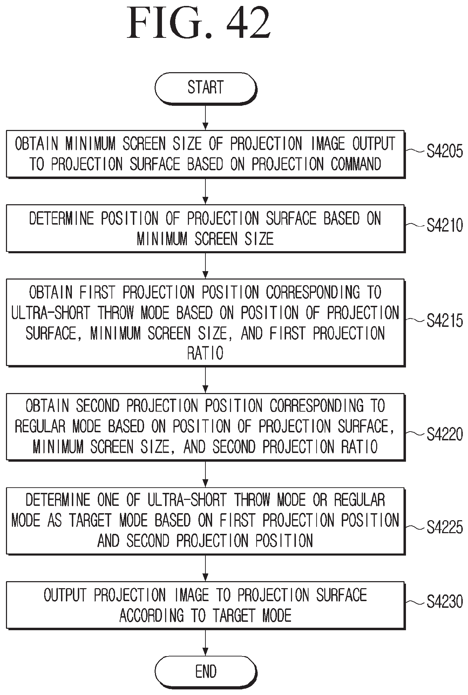

FIG. 42 is a diagram for describing a control method of the electronic apparatus 100 according to an embodiment.

Referring to FIG. 42, a control method of an electronic apparatus for controlling a projection unit in an ultra-short throw mode for outputting a projection image with a first projection ratio or a regular mode for outputting a projection image with a second projection ratio smaller than the first projection ratio according to an embodiment includes: obtaining a minimum screen size of a projection image to be output on a projection surface based on a projection command when the projection command is received (S4205); determining a position of the projection surface based on the minimum screen size (S4210); obtaining a first projection position corresponding to the ultra-short throw mode based on the position of the projection surface, the minimum screen size, and the first projection ratio (S4215); obtaining a second projection position corresponding to the regular mode based on the position of the projection surface, the minimum screen size, and the second projection ratio (S4220); determining one of the ultra-short throw mode or the regular mode as a target mode based on the first projection position and the second projection position (S4225); and outputting the projection image to the projection surface according to the target mode (S4230).

The step (S3025) of determining the target mode may include obtaining a first predicted time by summing up a first movement time from a current position of the electronic apparatus to the first projection position and a switching time, obtaining a second predicted time by summing up a second movement time from the current position of the electronic apparatus to the second projection position and a switching time, and comparing the first predicted time and the second predicted time to determine the target mode.

The switching time may include one of a time required to switch from a first state in which the projection unit is controlled in the ultra-short throw mode to a second state in which the projection unit is controlled in the regular mode, or a time required to switch from the second state to the first state.

The control method may further include moving to the first projection position and outputting the projection image to the projection surface based on the ultra-short throw mode, when the first predicted time is less than or equal to the second predicted time.

In the step (S3025) of determining the target mode, a first screen size of the projection image to be output to the projection surface in the ultra-short throw mode may be obtained based on a first projection position, a position of a projection surface, and a first projection ratio, a second screen size of the projection image to be output to the projection surface in the regular mode may be obtained based on a second projection position, the position of the projection surface, and a second projection ratio, and the target mode may be determined by comparing the first screen size and the second screen size.

The control method may further include obtaining a size difference value between the first screen size and the second screen size, and when the size difference value is greater than or equal to a threshold size value, changing the second projection position to be farther from the projection surface.

In the step (S3025) of determining the target mode, a first brightness value of the projection image to be output to the projection surface in the ultra-short throw mode may be obtained at the first projection position, a second brightness value of the projection image to be output to the projection surface in the regular mode may be obtained at the second projection position, and the target mode may be determined by comparing the first brightness value and the second brightness value.

The control method may further include obtaining a brightness difference value between the first brightness value and the second brightness value, and changing the second projection position to be closer to the projection surface when the brightness difference value is greater than or equal to a threshold brightness value.

In the step (S3015) of obtaining the first projection position, a first minimum position in the ultra-short throw mode may be obtained based on the position of the projection surface, the minimum screen size, and the first projection ratio, a first maximum position in the ultra-short throw mode may be obtained based on the position of the projection surface, the size of the projection surface, and the first projection ratio, and the first projection position may be obtained between the first minimum position or the first maximum position.

In the step (S3020) of obtaining the second projection position, a second minimum position in the ultra-short throw mode may be obtained based on the position of the projection surface, the minimum screen size, and the second projection ratio, a second maximum position in the regular mode may be obtained based on the position of the projection surface, the size of the projection surface, and the second projection ratio, and the second projection position may be obtained between the second minimum position or the second maximum position.

The above-described methods according to various embodiments of the present disclosure may be implemented in a form of application that may be installed in the existing electronic apparatus.

The above-described methods according to various embodiments of the present disclosure may be implemented only by software upgrade or hardware upgrade of the existing electronic apparatus.

Various embodiments of the disclosure described above may also be performed through an embedded server included in the electronic apparatus or the external server of at least one of the electronic apparatus or the display device.

According to an embodiment of the disclosure, various embodiments described above may be implemented by software including instructions stored in a machine-readable storage medium (for example, a computer-readable storage medium). A machine is a device capable of calling a stored instruction from a storage medium and operating according to the called instruction, and may include the electronic apparatus of the disclosed embodiments. In the case in which a command is executed by the processor, the processor may directly perform a function corresponding to the command or other components may perform the function corresponding to the command under a control of the processor. The command may include codes created or executed by a compiler or an interpreter. The machine-readable storage medium may be provided in a form of a non-transitory storage medium. Here, the term "non-transitory" means that the storage medium is tangible without including a signal, and does not distinguish whether data are semi-permanently or temporarily stored in the storage medium.

According to an embodiment of the disclosure, the above-described methods according to the diverse embodiments may be included and provided in a computer program product. The computer program product may be traded as a product between a seller and a purchaser. The computer program product may be distributed in a form of a storage medium (for example, a compact disc read only memory (CD-ROM)) that may be read by the machine or online through an application store. In case of the online distribution, at least a portion of the computer program product may be at least temporarily stored in a storage medium such as a memory of a server of a manufacturer, a server of an application store, or a relay server or be temporarily generated.

Each of components (for example, modules or programs) according to various embodiments described above may include a single entity or a plurality of entities, and some of the corresponding sub-components described above may be omitted or other sub-components may be further included in the diverse embodiments. Alternatively or additionally, some components (e.g., modules or programs) may be integrated into one entity and perform the same or similar functions performed by each corresponding component prior to integration. Operations performed by the modules, the programs, or the other components according to the diverse embodiments may be executed in a sequential manner, a parallel manner, an iterative manner, or a heuristic manner, at least some of the operations may be performed in a different order or be omitted, or other operations may be added.

Although embodiments of the present disclosure have been illustrated and described hereinabove, the present disclosure is not limited to the above-described specific embodiments, but may be variously modified by those skilled in the art to which the present disclosure pertains without departing from the scope of the present disclosure as disclosed in the accompanying claims. These modifications should also be understood to fall within the spirit of the present disclosure.

## Claims

1. An electronic apparatus, comprising:
a projection unit;
a memory; and
at least one processor configured to control the projection unit to output a projection image in an ultra-short throw mode or a regular mode,
wherein the at least one processor is configured to, when a projection command is received, identify a position of a projection surface based on a minimum screen size of the projection image output to the projection surface,
obtain the projection position based on the position of the projection surface, the minimum screen size, and a projection ratio, and
control the projection unit to output the projection image to the projection surface according to any one of the ultra-short throw mode or the regular mode based on the projection position.

2. The electronic apparatus as claimed in claim 1, wherein the ultra-short throw mode is a mode of outputting the projection image with a first projection ratio,
the regular mode is a mode of outputting the projection image with a second projection ratio smaller than a first projection ratio, and
the at least one processor is configured to obtain a first projection position corresponding to the ultra-short throw mode based on the position of the projection surface, the minimum screen size, and the first projection ratio,
obtain a second projection position corresponding to the regular mode based on the position of the projection surface, the minimum screen size, and the second projection ratio, and
control the projection unit to output the projection image to the projection surface according to any one of the ultra-short throw mode or the regular mode based on the first projection position and the second projection position.

3. The electronic apparatus as claimed in claim 2, wherein the at least one processor is configured to determine the one mode by comparing a first predicted time, which is a sum of a first movement time from a current position of the electronic device to the first projection position and a switching time, with a second predicted time, which is a sum of a second movement time from the current position of the electronic device to the second projection position and the switching time.

4. The electronic apparatus as claimed in claim 3, wherein the switching time includes one of a time required to switch from a first state in which the projection unit is controlled in the ultra-short throw mode to a second state in which the projection unit is controlled in the regular mode, or a time required to switch from the second state to the first state.

5. The electronic apparatus as claimed in claim 3, wherein, when the first predicted time is less than or equal to the second predicted time, the at least one processor is configured to control the projection unit to move to the first projection position and output the projection image to the projection surface based on the ultra-short throw mode.

6. The electronic apparatus as claimed in claim 2, wherein the at least one processor is configured to obtain a first screen size of the projection image to be output to the projection surface in the ultra-short throw mode based on the first projection position, the position of the projection surface, and the first projection ratio,
obtain a second screen size of the projection image to be output to the projection surface in the regular mode based on the second projection position, the position of the projection surface, and the second projection ratio, and
determine the one mode by comparing the first screen size and the second screen size.

7. The electronic apparatus as claimed in claim 6, wherein, when a size difference value between the first screen size and the second screen size is greater than or equal to a threshold size value, the at least one processor is configured to change the second projection position to be farther away from the projection surface.

8. The electronic apparatus as claimed in claim 2, wherein the at least one processor is configured to obtain a first brightness value of the projection image to be output to the projection surface in the ultra-short throw mode at the first projection position,
obtain a second brightness value of the projection image to be output to the projection surface in the regular mode at the second projection position, and
compare the first brightness value and the second brightness value to determine the one mode.

9. The electronic apparatus as claimed in claim 8, wherein, when a brightness difference value between the first brightness value and the second brightness value is greater than or equal to a threshold size value, the at least one processor is configured to change the second projection position to be closer to the projection surface.

10. The electronic apparatus as claimed in claim 2, wherein the at least one processor is configured to obtain the first projection position between a first minimum position in the ultra-short throw mode based on the position of the projection surface, the minimum screen size, and the first projection ratio, and a first maximum position in the ultra-short throw mode based on the position of the projection surface, the size of the projection surface, and the first projection ratio.

11. A control method of an electronic apparatus including a projection unit outputting a projection image in an ultra-short throw mode or a regular mode, the control method comprising:
identifying a position of a projection surface based on a minimum screen size of the projection image output to the projection surface when a projection command is received;
obtaining the projection position based on the position of the projection surface, the minimum screen size, and a projection ratio; and
outputting the projection image to the projection surface according to any one of the ultra-short throw mode or the regular mode based on the projection position.

12. The control method as claimed in claim 11, wherein the ultra-short throw mode is a mode of outputting the projection image with a first projection ratio,
the regular mode is a mode of outputting the projection image with a second projection ratio smaller than a first projection ratio,
in the obtaining of the projection position, a first projection position corresponding to the ultra-short throw mode is obtained based on the position of the projection surface, the minimum screen size, and the first projection ratio, and
a second projection position corresponding to the regular mode is obtained based on the position of the projection surface, the minimum screen size, and the second projection ratio, and
in the outputting of the projection image, the projection image is output to the projection surface according to any one of the ultra-short throw mode or the regular mode based on the first projection position and the second projection position.

13. The control method as claimed in claim 12, further comprising:
determining the one mode by comparing a first predicted time, which is a sum of a first movement time from a current position of the electronic device to the first projection position and a switching time, with a second predicted time, which is a sum of a second movement time from the current position of the electronic device to the second projection position and the switching time.

14. The control method as claimed in claim 13, wherein the switching time includes one of a time required to switch from a first state in which the projection unit is controlled in the ultra-short throw mode to a second state in which the projection unit is controlled in the regular mode, or a time required to switch from the second state to the first state.

15. The control method as claimed in claim 13, further comprising:
moving to the first projection position and outputting the projection image to the projection surface based on the ultra-short throw mode, when the first predicted time is less than or equal to the second predicted time.
